# EUROPEAN PATENT APPLICATION

(11) **EP 3 730 212 A1**
(43) Date of publication of application: **28.10.2020**
(21) Application number: 19171295.9
(22) Date of filing: 26.04.2019
(51) Int. Cl.: B01J 37/03, B01J 35/02, B01J 23/42, B01J 23/46, B01J 37/16, B01J 37/02, B01D 53/94, B01J 35/04, H01M 4/92, B01J 23/54, B01J 23/89

(54) **PRECIOUS METAL AND PRECIOUS METAL ALLOY NANOPARTICLES HAVING A BIMODAL SIZE DISTRIBUTION**

(71) Applicant: UMICORE AG & CO. KG, 63457 Hanau-Wolfgang (DE); Universita' Degli Studi Di Padova, 35122 Padova (IT)
(72) Inventor: SPOLAORE, Federico, 35135 Padova (IT); GROSS, Silvia, 35137 Padova (IT); LENNARTZ, Michael, 60435 Frankfurt am Main (DE)

(57) **Abstract**

The present invention relates to a process for preparing a colloidal suspension of precious metal nanoparticles and/or precious metal alloy nanoparticles comprising a bimodal particle size distribution. The one-pot process yields two groups of nanoparticles, a first comprising particles having an average maximum Feret diameter in the range of 0.5 to 5 nm, a second comprising particles with an average maximum Feret diameter in the range of 7 to < 100 nm. Further, the invention concerns to a colloidal suspension obtainable by the claimed process, to a process for preparing a washcoat using such a colloidal suspension and to the washcoat itself. The invention also relates to a process for preparing a heterogeneous catalyst using a claimed washcoat and to a heterogeneous catalyst obtainable by that process. The colloidal suspension is directly usable for a process yielding two separate groups of precious metal nanoparticles and/or precious metal alloy nanoparticles.

## Description

The present invention concerns a process for preparing a colloidal suspension of precious metal nanoparticles and/or precious metal alloy nanoparticles comprising a bimodal particle size distribution, a colloidal suspension obtainable by that process and the use of such a colloidal suspension. Moreover, the invention relates to a process for preparing a washcoat, a washcoat obtainable by that process, the use of such a washcoat, a process for preparing a heterogeneous catalyst using a washcoat according to the present invention, a heterogeneous catalyst obtainable by that process and a process for preparing precious metal nanoparticles and/or precious metal alloy nanoparticles.

Colloidal suspensions of precious metal nanoparticles, processes for preparing such suspensions as well as processes for isolating precious metal nanoparticles from such suspensions are known in the state of the art.

In particular, monometallic, bimetallic and trimetallic precious metal nanoparticles supported on carbon nanotubes, oxide matrices, preferably e.g. Al₂O₃, SiO₂ or TiO₂, and various ceramics are potential candidates for use in diverse technical fields, such as catalysis, batteries, fuel cells, microelectronics and gas diffusion electrodes.

In the last decades it was found that the performance of many catalytic processes is significantly dependent on the size of the applied metal particles. Recently, Casapu *et al*. investigated the influence of the platinum particle size and size distribution on the CO oxidation over Pt/Al₂O₃ catalysts. (M. Casapu, A. Fischer, A. M. Gänzler, R. Popescu, M. Crone, D. Gerthsen, M. Türk, J.-D. Grunwaldt, ACS Catal. 2017, 7, 343 - 355) In the same year Tatsumi *et al.* reported on an alcohol oxidation reaction over platinum nanoparticles deposited on mesoporous silica MCF-17. For methanol, ethanol, 2-propanol and 2-butanol the turnover frequency (TOF) grows with increasing nanoparticle size, both in the gas and in the liquid phase. (H. Tatsumi, F. Liu, H.-L. Han, L. M. Carl, A. Sapi, G. A. Somorjai, J. Phys. Chem. C 2017, 121, 7365 - 7371)

As the catalytic performance of nanoparticles is strongly dependent on their size and/or their size distribution, scientific and industrial research is currently focused on developing processes to control the nanoparticle size over a broad range. Particularly, it is aimed at synthesizing colloidal suspensions of individual primary nanoparticles having an average maximum Feret diameter beyond 10 nm, which are - according to the state of the art - difficult to obtain. An average maximum Feret diameter of 10 nm is hereinafter referred to as the "threshold limit".

In 2008 Bigall *et al.* reported on the synthesis of monodisperse platinum nanospheres with adjustable diameters ranging from 10 to 100 nm obtained by a multistep seed-mediated approach. However, the apparently monodisperse platinum spheres with diameters of 29 nm, 48 nm, 73 nm and 107 nm, respectively, consist of small crystallites having diameters in the range of 3 to 8 nm. (N. C. Bigall, T. Härtling, M. Klose, P. Simon, L. M. Eng, A. Eychmüller, Nano Lett. 2008, 8, 4588 - 4592) Five years later Farrell *et al.* published their results concerning the preparation of dispersal spherical platinum particles with controlled size and internal structure. The average diameter of the platinum spheres can be adjusted between 200 nm and 800 nm. However, the platinum particles are the result of an irreversible aggregation of nanoparticles with diameters of about 6 nm. (B. P. Farrell, I. V. Sevonkaev, D. V. Goia, Platinum Metals Rev. 2013, 57, 161 - 168)

The catalytic performance of nanoparticles is not only dependent on their size, but also highly dependent on the exact arrangement of atoms on the exposed facets. Therefore, production of monodisperse, individual, uniformly faceted nanoparticles is desired for high specificity in a catalytic process. However, the surface of those "raspberries" obtained by the aforementioned methods is dominated by edges and corners resulting in lower catalytic activities compared to individual primary nanoparticles.

For the preparation of a large variety of nanoparticles, including precious metal nanoparticles, the polyol process has become particularly important within the last 30 years. In 2004 Herricks *et al.* reported on a polyol synthesis of monodisperse platinum nanoparticles, in which morphological control is achieved by varying the amount of the inorganic additive NaNO₃. Ethylene glycol serves both as solvent and as reducing agent. In a typical procedure 1 mL of a 80 mM H₂PtCl₆ solution in ethylene glycol is rapidly added to 7 mL ethylene glycol held at 160 °C and containing both NaNO₃ and poly(vinyl pyrrolidone) (average molecular weight 55.000). Particles synthesized without NaNO₃ are irregular in shape and have sizes in the range of 3 to 5 nm. At the highest molar ratio of NaNO₃ to H₂PtCl₆ being 11 both octapod and tetrapod particles with dimensions > 30 nm are obtained. When increasing the ratio of NaNO₃ to H₂PtCl₆ from 0 to 11 the products exhibit a transition from irregular spheroids with rounded profiles, through a bimodal distribution to colloids comprising tetrahedra and octahedra with well-defined facets. (T. Herricks, J. Chen, Y. Xia, Nano Lett. 2004, 4, 2367 - 2371)

In 2005 Song *et al*. published their results concerning the synthesis of monodisperse platinum nanocrystals using H₂PtCl₆ as platinum metal precursor. By their modified polyol process cubes, cuboctahedra and octahedra are selectively obtained having similar sizes in the range of 9 to 10 nm. They found that applying AgNO₃ leads to an enhanced crystal growth rate along {100} and essentially determines the shape and surface structure of the platinum nanocrystals. (H. Song, F. Kim, S. Connor, G. A. Somorjai, P. Yang, J. Phys. Chem. B 2005, 109, 188 - 193)

In 2010 the findings of Song *et al.* concerning the role of silver ions in the polyol process were confirmed by Long *et al.* (N. V. Long, N. D. Chien, T. Hayakawa, H. Hirata, G. Lakshminarayana, M. Nogami, Nanotechnology 2010, 21, 035605 - 035620) However, unlike Song *et al*., Long *et al*. synthesized platinum nanoparticles with shapes of cubes and octahedra having sizes in the ranges of 5 to 7 nm and 8 to 12 nm, respectively.

In summary, the predescribed polyol processes for preparation of colloidal suspensions of precious metal nanoparticles, e.g. platinum nanoparticles, are multistep syntheses being relatively time and effort consuming and cost-intensive. Generally, H₂PtCl₆ is applied as platinum metal precursor. However, this reactant is toxic and hygroscopic. Thus, it is required to handle this reagent with great care and under an exclusion of moisture, which leads to a lot of extra work and relatively high expenses. Moreover, depending on the application of the resulting nanoparticles the presence of chloride anions in the final product may be detrimental. Furthermore, the inorganic additive AgNO₃ applied in literature is relatively expensive. In addition, the silver ions might also be reduced by the polyol, potentially leading to a contamination of the desired platinum nanoparticles. Another disadvantage of the established polyol processes is the limited size range of individual primary nanoparticles achieved so far. Altogether the known polyol processes for preparation of colloidal suspensions of precious metal nanoparticles are comparatively unsatisfactory.

It is an objective of the present invention to overcome the above-mentioned and other disadvantages of the state of the art and to provide a process for preparing a colloidal suspension of precious metal nanoparticles and/or precious metal alloy nanoparticles. The process should be versatile, straight-forward, environmentally friendly, energy-saving, cost-efficient and easily scalable for industrial production with high purities and good yields. The colloidal suspensions obtainable by this process should be basically halogen-free and comprise precious metal nanoparticles and/or precious metal alloy nanoparticles of defined sizes, while a broad range of sizes should be covered. In addition, these colloidal suspensions and/or the nanoparticles obtainable from such suspensions should be applicable to a wide range of applications, especially to a broad scope of catalytic reactions, e.g. in the field of fuel cells and purification devices for automotive exhausts. Furthermore, the present invention is directed towards the use of such a colloidal suspension for preparing a washcoat, towards a process for preparing such a washcoat, towards a washcoat obtainable by such a process, towards the use of such a washcoat, towards a process for preparing a heterogeneous catalyst using such a washcoat and towards the heterogeneous catalyst itself. Another objective of the present invention is to provide a process for preparing precious metal nanoparticles and/or precious metal alloy nanoparticles from a colloidal suspension according to the present invention. In addition, the present invention relates to the use of these precious metal nanoparticles and/or precious metal alloy nanoparticles obtainable from a colloidal suspension according to the present invention as catalytic components and towards a process using such precious metal nanoparticles and/or precious metal alloy nanoparticles as catalytic components.

The main characteristics of the invention are indicated in claim 1, claim 12, claims 14 to 18, claim 20 or claim 21. Embodiments are subject matters of claims 2 to 11, claim 13 or claim 19.

The problem is solved by a process for preparing a colloidal suspension of precious metal nanoparticles and/or precious metal alloy nanoparticles,
▪ the suspension comprising a bimodal particle size distribution of the precious metal nanoparticles and/or the precious metal alloy nanoparticles,
▪ the precious metal nanoparticles and/or the precious metal alloy nanoparticles within the bimodal particle size distribution each having an average maximum Feret diameter < 100 nm
   and,
▪ in case the suspension comprises precious metal alloy nanoparticles, each alloy nanoparticle comprising at least one first metal and at least one second metal, wherein
   - the at least one first metal is a precious metal, the at least one second metal is selected from the group consisting of precious metals and base metals,
   - and
   - the at least one second metal is different from the at least one first metal,
   comprising the steps of
   a) preparing a reaction mixture in a water-containing reaction medium comprising
      - at least one solvent component being prone to act as a reducing agent A
         wherein
         the reaction mixture comprises the following halogen-free compounds
         i. at least one precious metal precursor
            or
            at least one precious metal precursor and at least one base metal precursor,
         ii. an inorganic additive
            comprising a cation, with the proviso that precious metal cations are excluded, and a nitrate anion
      and
   b) reacting the reaction mixture at a temperature T_{R} which is the boiling temperature of the water-containing reaction medium.

The term "nanoparticle" as used in the context of the invention described herein refers to individual primary particles with average maximum Feret diameters below 100 nm as determined by transmission electron microscopy (TEM). Depending on the reaction conditions, formation of low quantities of larger particles having diameters of or beyond 100 nm may occur. "Low quantities of larger particles" means that 5 per cent or less of the total amount of particles have a diameter of or beyond 100 nm. However, these particles are not nanoparticles in the sense of the above definition, irrespective of whether they are agglomerates, aggregates or dirt. They can be filtered off or even remain in the colloidal suspension without disturbing effects of the nanoparticles having diameters according to the present invention.

Within the scope of the present invention the term "halogen-free" means that a reagent, reactant, additive, precursor or solvent does not contain halogen in its formula but may contain minor amounts of free or bound halogen. In particular, this concerns the applied precious metal precursors and base metal precursors. Thus, in the context of the present invention, a precious metal precursor and a base metal precursor, respectively, is considered as halogen-free if it has a halogen content - based on the metal content - of 5,000 ppm (five thousand) or less, preferably 2,000 ppm (two thousand) or less, more preferably 500 ppm (five hundred) or less. Suitable methods for determining the halogen content of the applied reagent, reactant, additive, precursor or solvent, particularly of the applied metal precursors, are ion chromatography (IC) and inductively coupled plasma mass spectrometry (ICP-MS). In case of determining the chlorine, bromine or iodine content of a sample by ICP-MS the "memory effect", which is an inherent characteristic of this method, has to be minimized, e.g. by using alkaline solutions of the respective samples.

In the context of the invention described herein the term "precious metal alloy nanoparticles" refers to nanoparticles, irrespective of whether they are alloys or intermetallic compounds, comprising at least one precious metal and at least one additional metal selected from the group consisting of precious metals and base metals. Generally, the term "alloy" refers to a macroscopically homogeneous, metallic material, consisting of at least two elements. However, in this context at least one of them is a precious metal and the least one additional element is selected from the group consisting of precious metals and base metals, and the at least two elements show metallic bonds. In general, "intermetallic compounds" are homogeneous chemical compounds of two or more metals. However, in this context such a compound comprises at least one precious metal, and the at least one additional metal is selected from the group consisting of precious metals and base metals. By contrast to alloys, intermetallic compounds show lattice structures which are different from those of the constituent metals. Their lattices show a mixed bonding of a metallic part and a lower part of atomic or ionic bonds, resulting in crystalline suprastructures.

The term "bimodal particle size distribution" as used in the context of the present invention refers to individual primary nanoparticles falling under the scope of the invention described herein. Therefore, agglomerates, aggregates or dirt formed during the process and having average maximum Feret diameters of or beyond 100 nm are excluded from the bimodal particle size distribution, even though they are not removed from the colloidal suspension of nanoparticles according to the present invention, before applying the suspension.

A colloidal suspension comprising a bimodal particle size distribution of precious metal nanoparticles and/or precious metal alloy nanoparticles and falling under the scope of the present invention is distinguished from a colloidal suspension comprising a continuous particle size distribution or from a mere mixture of two nanoparticle populations mixed after having been synthesized separately by means of several criteria:
Within the scope of the present invention the bimodal particle size distribution comprised in a colloidal suspension obtainable by the claimed process is a distribution comprising two independent populations, hereinafter also referred to as "nanoparticle populations". The first population of nanoparticles has an average maximum Feret diameter of between 0.5 and 5 nm, whereas the second population of nanoparticles has an average maximum Feret diameter of between 7 and 100 nm. An "independent population" in the sense of the present invention means that only 5 per cent or less of all particles obtainable by the process according to the present invention fall into the gap between the two populations, whereas the other 95 per cent or more of the total number of particles are distributed between the two populations. The "gap" thus represents particles having average maximum Feret diameters of between 5 to 7 nm. Each of the two populations accounts for at least 5 per cent of the total number of nanoparticles obtained by the process according to the invention.

In this context it is worth mentioning that when counting the nanoparticles of the two populations, either by hand or by using an automated program, a small number of nanoparticles might be recorded within the gap between the two nanoparticle populations. However, these few nanoparticles are not considered as an overlap of the two independent Gaussian distributions.

The two nanoparticle populations within a bimodal particle size distribution according to the present invention contain a peak each, i.e. a maximum. In case a Gaussian distribution is ideal, i.e. symmetrical, the peak corresponds to the average particle size, hereinafter also referred to as average maximum Feret diameter, of the respective nanoparticle population. For analysis and characterisation, respectively, of the nanoparticles within a bimodal particle size distribution at least 200 particles, preferably 500 particles, most preferably 1000 particles, of a representative average of the colloidal suspension are investigated, namely prior to the drying process. The average maximum Feret diameters - determined by TEM - are above 0.5 nm and below 100 nm. A first nanoparticle population has an average maximum Feret diameter in the range of 0.5 nm to 5 nm, whereas the average particle size of the second population is widely adjustable, namely in the range of 7 nm to > 100 nm, i.e. notably by far beyond the threshold limit of 10 nm.

The present invention has the advantage over the prior art that the reaction solution is not limited to water-free solvents, but tolerates water. Thus, it is possible to use non pre-dried solvents and/or add components of the reaction mixture that are dissolved in water.
In the context of the present invention, a water-containing reaction mixture means that the reaction mixture comprises an amount of water being at least sufficient to dissolve the applied metal salts, in particular, the at least one precious metal precursor as well as the inorganic additive and - in case of a colloidal suspension comprising precious metal alloy nanoparticles - the at least one base metal precursor. A non-aqueous solvent or non-aqueous solvents components, respectively, and the water comprised in the reaction medium shall be miscible, at least during the reaction, i.e. they must not form two or more phases during the reaction period.

Moreover, according to the present invention it is provided that the water-containing reaction medium comprises at least one solvent being applied as a reducing agent A. Some of the solvents suitable for the above claimed procedure, e.g. a number of alcohols, polyols or sugar alcohols, are - besides their original solvent properties - prone to act as a reductant, i.e. to reduce a precious metal ionic species and/or a base metal ionic species within the reaction mixture to the corresponding metal having an oxidation state of 0 (zero). Thus, these solvents are referred to as "bifunctional solvents". They can be used both as sole non-aqueous solvent component of the water-containing reaction medium and as the reducing agent A. Alternatively, within the scope of the present invention a bifunctional solvent applied as the reducing agent A can be used together with at least one solvent not being prone to act as a reductant and, thus, acting solely as an "inert" non-aqueous solvent component of the reaction medium. In the context of the present invention the term "inert" is related to substances, particularly solvents which - under the respective reaction conditions - do not react with potential reactants, e.g. air, water, starting materials, intermediates and products of a reaction. It is also possible to apply a water-containing reaction medium comprising at least one bifunctional solvent - being applied as non-aqueous solvent component of the reaction medium and as the reducing agent A - and at least one inert solvent as non-aqueous solvent component.

Within the scope of the present invention the term "solvent", regardless of whether or not the solvent is a bifunctional solvent, refers to a single solvent or a solvent mixture, regardless of whether or not the solvent mixture comprises a bifunctional solvent.

"Temperature T_{R}" refers to the internal temperature T_{R} of the respective reactor. "In the range of a boiling temperature" means that the internal temperature T_{R} is the boiling temperature of the solvent or the solvent mixture, respectively.

The term "reactor" is not limited to any capacity, material, feature or form of the reaction vessel. Suitable reactors are, for instance, stirring tank reactors, tubular reactors, microreactors and flow-through reactors.

An internal temperature of the reactor can be determined by means of at least one temperature sensor for at least one domain within the reactor. Thereby provision is made for at least one temperature sensor determining the internal temperature T_{R} which is usual identical to an average internal temperature T_{A} of the reactor.

A "stabilizer" prevents the individual precious metal nanoparticles and/or precious metal alloy nanoparticles within the colloidal suspension from agglomeration.

The process according to the present invention is conducted as a one-pot synthesis comprising only two steps and yielding a stable colloidal suspension comprising, surprisingly, a bimodal particle size distribution. Thus, on the one hand, a single colloidal suspension obtainable by the claimed process comprises two groups of nanoparticles having different size ranges. This provides the advantage that a single colloidal suspension is directly applicable to two or more different catalytic reactions requiring significantly different particle sizes, e.g. to platinum catalysed CO conversion, NH₃ oxidation or NO oxidation. On the other hand, the particle size itself is particularly widely adjustable, notably by far beyond the threshold limit of 10 nm. Particle size control of nanoparticles within a colloidal suspension according to the present invention occurs by minor changes - within strict limits - of the straightforward synthesis protocol. Otherwise an unstable colloidal suspension or a stable colloidal suspension comprising almost exclusively small nanoparticles with average maximum Feret diameters in the range of 1 to 3 nm is yielded (cf. Comparative Example 2). There is a large variety of parameters being variable within strict limits, such as solvent, metal precursor type, metal concentration, stabilizer, molar ratio between stabilizer and precious metal or precious metals, respectively, reducing agent, inorganic additive, molar ratio between anion of the inorganic additive and precious metal or precious metals, respectively, internal temperature T_{R} of the reactor and time period of the respective process steps. Thus, by the claimed process tailor-made colloidal suspensions are provided which are comparatively long-term stable, i.e. they can be stored for at least several weeks, i.e. at least one month, without agglomeration, decomposition or ageing of the comprised nanoparticles. They can be used for a large variety of catalytic reactions showing a dependency on the nanoparticle size.

The claimed process has to be conducted in a water-containing reaction medium. This is a major difference compared to reactions disclosed in the prior art as they often require water-free reaction media. As a consequence, with respect to the claimed process preparative efforts are reduced, which makes it comparatively time-efficient and cost-saving. There are several options how to provide the water-containing reaction medium: If water - the most environmentally friendly solvent - is selected as one solvent component of the reaction medium, the process according to the present invention as well as the colloidal suspensions obtainable by this process will have a comparatively low environmental impact.

Another advantage of the present process is that all compounds used for the synthesis, i.e. reagents, reactants, additives, precursors and solvents, are halogen-free in the sense of the present invention - as defined above - and commercially available. Particularly, the precious metal and base metal precursors are commercially available halogen-free metal salts and metal complexes, respectively, whereby some of the applicable metal precursors are only available as aqueous solutions. Thus, no labour-intensive, time-consuming and/or expensive preparation or *in situ* generation of any compound is required and no solvent exchange is needed for preparing the herein claimed colloidal suspension. Due to the absence of halogens - as defined above - one of the most important prerequisites for automotive applications is fulfilled. Moreover, the inorganic additive does not contain a precious metal and thus is comparatively inexpensive. Based on the aforementioned advantages the claimed process can readily be conducted in industrial scale. Altogether, the claimed process for preparing a colloidal suspension of precious metal nanoparticles and/or precious metal alloy nanoparticles is satisfactory, particularly with regard to economic and ecological aspects.

In one embodiment of the claimed process the precious metal is selected from the group consisting of ruthenium, rhodium, palladium, silver, osmium, iridium, platinum and gold, and mixtures, alloys, intermetallic compounds and combinations thereof.

With respect to precious metal precursors applicable to the claimed process the term "alloy" refers to a macroscopically homogeneous, metallic material, consisting of at least two elements, wherein at least one of them is a metal and the at least two elements show metallic bonds. Moreover, in this context, "intermetallic compounds" are homogeneous chemical compounds of two or more metals, wherein at least one of them is a precious metal. By contrast to alloys, they show lattice structures which are different from those of the constituent metals. Their lattices show a mixed bonding of a metallic part and a lower part of atomic or ionic bonds, resulting in crystalline suprastructures.

Another embodiment of the process provides that the precious metal precursor is selected from the group consisting of precious metal acetates, precious metal propylene carbonates, precious metal hydrogen propylene carbonates, precious metal nitrates, precious metal malonates, precious metal oxalates, precious metal hydroxo complexes, precious metal hydroxometallates, precious metal amine complexes, and mixtures, aquo complexes, solutions and combinations thereof. All the aforementioned precious metal precursors can also be applied as solutions, e.g. as aqueous solutions.

Advantageously, all the potential precious metal precursors are halogen-free in the sense of the present invention - as defined above - and commercially available, whereby some of the applicable precious metal precursors are only available as aqueous solutions. Depending on the envisaged composition of the colloidal suspension a single precious metal precursor or a mixture of two or more precious metal precursors can be added to the reaction mixture. The at least one precious metal precursor is applicable as a solid material or as a solution, even as an aqueous solution. For example, platinum(II) nitrate can be applied as a solid material, as a solution with a theoretical metal content of 24 % (Umicore AG & Co. KG, Precious Metals Chemistry, Product Number: 3000036187) or as a solution with a theoretical metal content of 10 % (Umicore AG & Co. KG, Precious Metals Chemistry, Product Number: 3000036306). Unlike state of the art requiring an anhydrous reaction environment, the claimed process allows use of aqueous solutions of the precious metal precursors. Consequently, preparative efforts are reduced, which makes the claimed procedure comparatively time-efficient and cost-saving.

It was found that the claimed process works very well when applying a basic aqueous solution of a precious metal precursor, preferably a precious metal precursor comprising a basic precious metal containing anion. More preferably the precious metal precursor is a tetraalkylammonium tetra- or hexahydroxometallate according to the formula (N(alkyl)₄)_{y}[M(OH)ₓ], wherein
- alkyl is selected from the group consisting of ethyl, propyl, isopropyl, n-butyl, isobutyl, *tert*-butyl, *n*-pentyl, *sec-*pentyl, 3-pentyl, 2-methylbutyl, isopentyl, 3-methylbut-2-yl, 2-methylbut-2-yl, neopentyl, n-hexyl, 3-methylpentyl, isohexyl, neohexyl, 2,3,-dimethylbutyl, and combinations thereof,
- M is selected from the group consisting of rhodium, platinum, iridium and palladium,
- y = 1, 2 or 3
   and
- x = 4 or 6.

Preferably, the alkyl groups are identical.

Most preferably the precious metal precursor is a tetraalkylammonium hydroxometallate of rhodium, palladium or platinum. Suitable precious metal precursors are, for instance,(N(ethyl)₄)[Rh(OH)₄], (N(ethyl)₄)₃[Rh(OH)₆], (N(ethyl)₄)[Pd(OH)₄], (N(ethyl)₄)₂[Pd(OH)₄] and (N(ethyl)₄)₂[Pt(OH)₆].

For example, when using (N(ethyl)₄)₂[Pt(OH)₆], also known as Pt-TEAH, instead of usually applied H₂PtCl₆ a stable colloidal suspension comprising a bimodal particle size distribution is obtained. Therein, one group of nanoparticles shows - dependent on the other process parameters - an average maximum Feret diameter of about 10 nm or considerably beyond 10 nm, e.g. 16.4 nm. This finding is in contrast to the results of Herricks *et al*. who only reported on an intermediately observed bimodal particle size distribution, wherein both groups of nanoparticles have an average maximum Feret diameter significantly below 10 nm. As a consequence, it can be concluded that basic precious metal precursors, such as (N(ethyl)₄)₂[Pt(OH)₆], have a different impact on reaction kinetics of metal reduction and thus seed formation and nanoparticle growth, when compared to H₂PtCl₆.

Alternatively, or as a complement, the precious metal precursor comprises a basic precious metal containing cation. For instance, the precious metal precursor is selected from the group consisting of [Pd(NH₃)₄](OH)₂, [Pd(NH₃)₂](NO₂)₂, [Pd(NH₃)₄](NO₃)₂, [Pd(NH₃)₄]C₂O₄, [Pd(NH₃)₄]SO₄, [Pd(NH₃)₄](C₂H₃O₂)₂ x 2H₂O, [Pt(NH₄)₂](OH)₆, [Pt(NMe₄)₂](OH)₆, [Pt(NEt₄)₂](OH)₆ and H₂Pt(OH)₆.

In case the precious metal precursor is a silver compound, said silver compound is selected from the group consisting of silver carbonate, silver nitrate, silver oxide, silver lactate, a silver hydantoine and mixtures and combinations thereof.

In case the precious metal precursor is a gold compound, said gold compound is selected from gold(I) hydantoin complexes, gold(III) hydantoin complexes ND gold(I) cysteine complexes.

Preferably, the hydantoine complexes of silver or gold, respectively, are selected from complexes of 1-methyl hydantoine, 1,3-dimethyl hydantoine, 5,5'-dimethyl hydantoine, 1-hydroxymethyl-5,5-dimethylhydandoint, 5,5'-diethyl hydantoine, 5,5'-diphenyl hydantoine and mixtures and combinations thereof.

Dependent on the intended size ranges within the bimodal particle size distribution it is provided that in the reaction mixture the concentration of the precious metal is in the range of 0.5 mM to 500 mM, preferably in the range of 1 mM to 130 mM and more preferably in the range of 5 mM to 110 mM.

In a further embodiment of the claimed process the base metal is selected from the group consisting of scandium, titanium, vanadium, chromium, manganese, iron, cobalt, nickel, copper, zinc, yttrium, zirconium, niobium, molybdenum, hafnium, tantalum, tungsten, rhenium and tin, and mixtures, alloys, intermetallic compounds and combinations thereof. Preferably, the base metal is selected from titanium, manganese, iron, cobalt, nickel, copper and tin, even more preferably from manganese, cobalt, nickel and copper.

With respect to base metal precursors applicable to the claimed process the term "alloy" refers to a macroscopically homogeneous, metallic material, consisting of at least two elements, wherein at least one of them is a base metal and the at least two elements show metallic bonds. Moreover, in this context, "intermetallic compounds" are homogeneous chemical compounds of two or more metals, wherein at least one of them is a base metal. By contrast to alloys, they show lattice structures which are different from those of the constituent metals. Their lattices show a mixed bonding of a metallic part and a lower part of atomic or ionic bonds, resulting in crystalline suprastructures.

The skilled person knows that copper is a semi-precious metal. Semi-precious metals are metals whose standard potential is higher than that of hydrogen. These semi-precious metals do not react with solutions of non-oxidizing acids, such as hydrochloric acid or diluted sulfuric acid, by releasing hydrogen. On the other hand, the standard potential of semi-precious metals is much less positive than the standard potential of real precious metals such as ruthenium, rhodium, palladium, silver, osmium, iridium, platinum and gold. In the context of the present invention copper is considered a base metal.

Suitable base metal precursors are, for example, base metal acetates, base metal propylene carbonates, base metal hydrogen propylene carbonates, base metal nitrates, base metal malonates, base metal oxalates, base metal hydroxo complexes, base metal hydroxometallates, and mixtures, aquo complexes, solutions and combinations thereof. All the aforementioned base metal precursors can also be applied as solutions, e.g. as aqueous solutions.

In a preferred embodiment, the base metal is present in an amount of 0.1 to 30 wt%, more preferably 0.5 to 25 wt%. For example, a platinum-base metal alloy nanoparticle preferably comprises 80 to 99 wt% platinum, and thus, 1 to 20 wt% of a base metal. In another preferred embodiment, the base metal is selected from titanium, manganese, iron, cobalt, nickel, copper and tin, and mixtures, alloys, intermetallic compounds and combinations thereof, and it is present in an amount of 0.1 to 30 wt.-%, preferably 0.5 to 25 wt.-%.

Even more preferred, the base metal is selected from manganese, cobalt, nickel and copper, and mixtures, alloys, intermetallic compounds and combinations thereof, and it is present in an amount of 1 to 10 wt.-%.

According to another embodiment of the claimed process the reaction medium comprises at least one solvent selected from the group consisting of water, acetonitrile, propylene carbonate, alcohols, polyols, sugar alcohols, and mixtures thereof. Preferably, the reaction medium comprises at least one solvent selected from the group consisting of water, propylene propylenecarbonate, ethylene glycol, diethylene glycol, triethylene glycol, 1,2-propylene glycol, glycerine, sorbitol, xylitol, and mixtures thereof. All suitable organic solvents are standard and therefore commercially available. The reaction mixture can also comprise more than one of the aforementioned solvents.

Within the scope of the present invention the term "polyol" means an organic compound containing at least two hydroxyl groups. Thus, "polyol" refers to a diol, usually a 1,2-diol. Examples are ethylene glycol (EG) and its derivatives. Further, the term "polyol" refers to diethylene glycol (DEG), triethylene glycol (TEG), tetraethylene glycol (TTEG) *etc.* up to poly(ethylene glycol) (PEG). In addition, "polyol" means isomers of propanediol, butanediol, pentanediol *etc.* Compounds having more than two hydroxyl groups, e.g. glycerol (GLY), pentaerythritol and carbohydrates, also fall under the definition of "polyol" within the scope of the present invention.

Some of the aforementioned solvents suitable for the above claimed procedure, e.g. a number of alcohols, polyols or sugar alcohols, are - besides their original solvent properties - prone to act as a reductant, i.e. to reduce a precious metal ionic species and/or a base metal ionic species within the reaction mixture to the corresponding metal having an oxidation state of 0 (zero). These bifunctional solvents can be used both as solvent component of the water-containing reaction medium and as the reducing agent A. Alternatively, within the scope of the present invention a bifunctional solvent applied as the reducing agent A can be used together with at least one solvent not being prone to act as a reductant and, thus, acting solely as an inert non-aqueous solvent component of the reaction medium. As a further alternative, a bifunctional solvent applied both as the reducing agent A and as a solvent component of the reaction medium can be used together with at least one bifunctional agent Z being dissolvable in the respective water-containing reaction medium. In the context of the present invention, a "bifunctional agent" is a compound that has both a dissolving and a reducing capability. Thus, both the agents A and Z are bifunctional. The agent Z is chosen form the same group of agents as listed above for agent A with the proviso that A and Z are not identical.

Another alternative is that at least one inert solvent can be applied as sole non-aqueous solvent component of the water-containing reaction medium comprising at least one bifunctional agent Z being dissolvable in the respective water-containing reaction medium. It is also possible to apply a water-containing reaction medium comprising at least one bifunctional solvent - being applied as non-aqueous solvent component of the reaction medium and/or as the reducing agent A - and at least one inert solvent as non-aqueous solvent component, wherein the water-containing reaction medium comprises, in addition, at least one bifunctional agent Z being dissolvable in the water-containing reaction medium. A non-aqueous solvent component or non-aqueous solvent components, respectively, and the water comprised in the reaction medium shall be miscible, at least during the reaction, i.e. they must not form two or more phases during the reaction period.

By contrast to the prior art the claimed process has to be conducted in a water-containing reaction medium. This is a major difference compared to reactions disclosed in the prior art as they often require water-free reaction media. As a consequence, with respect to the claimed process preparative efforts are reduced, which makes it comparatively time-efficient and cost-saving. If water - the most environmentally friendly solvent - is selected as one solvent component of the reaction medium, the process according to the present invention as well as the colloidal suspensions obtainable by this process will have a comparatively low environmental impact.

For instance, it was found that use of an ethylene glycol/water mixture as reaction medium, at a weight ratio of 1 : 2, leads - all other reaction parameters remaining equal - to identical results like usage of ethylene glycol as sole non-aqueous solvent component of the aqueous reaction medium.

Alternatively, or as a complement, in one embodiment of the claimed process at least one compound is applied as an aqueous solution and/or at least one non-predried solvent is used and/or additional water is added to at least one solid compound, to at least one solution of a compound and/or to the reaction mixture itself. In a preferred embodiment the precious and/or base metal precursor is applied as an aqueous solution and/or at least one non-predried solvent is used and/or additional water is added to at least one solid precious metal precursor and/or base metal precursor, to at least one precious metal precursor and/or base metal precursor solution and/or to the reaction mixture itself.

It has to be noted that organic solvents used in the process according to the present invention can be predried, but predrying the organic solvents is not necessary. Thus, it is preferred to use non-predried organic solvents.

In general, an alcohol, a polyol or a sugar alcohol is prone to act as a reductant, i.e. to reduce a precious metal ionic species and/or a base metal ionic species within the reaction mixture to the corresponding metal having an oxidation state of 0 (zero). Thus, these solvents are referred to as "bifunctional solvents". They can be used both as sole or at least one non-aqueous solvent component of the reaction medium and as the reducing agent A.

In one preferred embodiment of the claimed process the at least one solvent component being prone to act as the reducing agent A is selected from the group consisting of alcohols, polyols and sugar alcohols, and mixtures thereof.

In case at least one alcohol, at least one polyol or at least one sugar alcohol, or a mixture thereof, is used both as sole non-aqueous solvent component of the reaction medium and as the reducing agent A or at least as one non-aqueous solvent component of the water-containing reaction medium the process described above is considerably simplified and less expensive as, in principle, no additional reductant is required. Advantageously, in the presence of an excess of alcohol, polyol and/or sugar alcohol oxidation of the precious metal nanoparticles and/or precious metal alloy nanoparticles, which are comprised in the colloidal suspension, is prevented.

In one embodiment of the claimed process the inorganic additive is selected from the group consisting of nitric acid, NH₄NO₃ or a nitrate salt comprising a base metal cation, and mixtures thereof. Suitable inorganic additives are nitric acid, NH₄NO₃, NaNO₃, KNO₃, Mg(NO₃)₂, Ca(NO₃)₂, Sr(NO₃)₂ and Ba(NO₃)₂, and mixtures thereof. In a preferred embodiment the inorganic additive is selected form the group consisting of nitric acid, NH₄NO₃, Ca(NO₃)₂ and Sr(NO₃)₂, and mixtures thereof.

Herricks *et al.* also suggested that the function of NaNO₃ and air is to change the reaction pathway for Pt(IV) reduction, thereby enhancing anisotropic growth of Pt nanoparticles. Regarding the role of the nitrate anion this suggestion is in accord with the inventors' findings. However, compared to Herricks *et al.,* the inventors obtained completely different results when varying the ratio between the nitrate anion and the precious metal or the precious metals, respectively.

In one embodiment of the claimed process it is provided that in the reaction mixture a molar ratio of the nitrate anion to the precious metal or the precious metals, respectively, is in the range of 0.1 to 50, preferably in the range of 0. 5 to 20 and more preferably in the range of 1 to 10.

According to the synthesis protocol of Herricks *et al.* the molar ratio NO₃⁻: Pt is increased from 0 to 11. Thereby differently sized and shaped platinum nanoparticles are obtained and, intermediately, a bimodal particle size distribution is observed, namely at a molar ratio NO₃⁻: Pt of 1.6. However, within the bimodal size distribution both groups of nanoparticles have an average maximum Feret diameter which is significantly below 10 nm, namely in the range of about 2 to 5 nm. Furthermore, at a molar ratio NO₃⁻: Pt of 3.3 Herricks *et al.* produce a monodisperse colloid comprising platinum nanoparticles with an average maximum Feret diameter of about 5 nm.

By contrast, when the claimed procedure is conducted using (N(ethyl)₄)₂[Pt(OH)₆] and a fixed molar ratio NO₃⁻: Pt of 5.8, i.e. a fixed molar ratio far above 1.6, a stable colloidal suspension comprising a bimodal particle size distribution is obtained. Further, dependent on the other reaction parameters, within the bimodal particle size distribution one group of nanoparticles has an average maximum Feret diameter which is considerably beyond 10 nm, e.g. 16.4 nm. As discussed above, it can be concluded that basic platinum precursors, such as the tetraalkylammonium hydroxometallate (N(ethyl)₄)₂[Pt(OH)₆], have a different impact on reaction kinetics of metal reduction and thus seed formation and nanoparticle growth, when compared to H₂PtCl₆.

In another embodiment of the claimed process, the reaction mixture according to step a) of the process according to the present invention additionally comprises a stabilizer. The stabilizer is selected from the group consisting of polymers, citrates, fatty amines, alginates and Arabic gum, and mixtures thereof. Thus, a wide scope of stabilizers is applicable to the claimed method.

According to another embodiment of the claimed process the polymer is selected from the group consisting of poly(*N*-vinyl-2-pyrrolidone), poly(vinyl alcohol), poly(acrylamide), poly(acrylic acid) and poly(ethylene imine). Preferably the polymer is poly(*N*-vinyl-2-pyrrolidone) having an average molecular weight in the range of 4,000 to 1,300,000, more preferably the polymer is poly(*N*-vinyl-2-pyrrolidone) having an average molecular weight in the range of 6,000 to 70,000, and most preferably the polymer is poly(*N*-vinyl-2-pyrrolidone) having an average molecular weight in the range of 15,000 to 56,000. Advantageously, all suitable stabilizers are commercially available and relatively inexpensive.

The molar ratio between the stabilizer and the precious metal or the precious metals, respectively, is an effective parameter to achieve a specific bimodal particle size distribution. In one embodiment of the claimed process it is provided that in the reaction mixture a molar ratio of the stabilizer to the precious metal or the precious metals, respectively, is in the range of 1 : 1 to 50 : 1, preferably in the range of 1 : 1 to 20 : 1, and more preferably in the range of 5 : 1 to 10 : 1. It was proven that excess of the stabilizer, e.g. poly(*N*-vinyl-2-pyrrolidone), does not have an adverse influence on the claimed process. In the context of the present invention, the term "stabilizer" refers to the monomer unit of the polymer.

As already mentioned above, within the scope of the present invention the term "solvent", refers to a single solvent or a solvent mixture.

If "solvent" means one single solvent, said solvent is bifunctional as defined above. If "solvent" refers to a solvent mixture, at least one of the solvens comprised in the mixture is bifunctional.

In addition, the solvent or at least one component of the solvent mixture, respectively, may be predried or non-predried.

In one embodiment the first solvent is water. Optionally,the first solvent additionally comprises at least one organic solvent selected from the group consisting of acetonitrile, propylene carbonate, alcohols, polyols, sugar alcohols, and mixtures thereof. Preferably, the first solvent is water.

In another embodiment, the second solvent is selected from the group consisting of acetonitrile, propylenecarbonate, alcohols, polyols, sugar alcohols, and mixtures thereof.

The group consisting of acetonitrile, propylenecarbonate, alcohols, polyols and sugar alcohols is hereinafter referred to as "organic solvents". Suitable organic solvents belonging to this group are, for instance, propylenecarbonate, ethylene glycol, diethylene glycol, triethylene glycol, 1,2-propylene glycol, glycerine, sorbitol and xylitol, and they are the preferred organic solvents to be used in the embodiments relating to preferred first and second organic solvents above.

All suitable organic solvents are standard and therefore commercially available.

All first and second solvents have to be miscible. The term "miscibile" means that the first solvent and the second solvent must not form two or more phases during the reaction period, at least during the reaction.

In a preferred embodiment, both the first and the second solvent comprise at least one organic solvent, and said organic solvent is the same in both solvents.

One embodiment of the claimed process provides that step a) comprises the steps of
A. preparing a solution or a dispersion in a first solvent comprising
   - the at least one precious metal precursor
      or
   - the at least one precious metal precursor and
   the at least one base metal precursor,
B. preparing a solution or a dispersion in a second solvent comprising,
   i) the inorganic additive
      comprising a cation, with the proviso that precious metal cations are excluded, and a nitrate anion
      and optionally
   ii) the stabilizer,
   and
C. mixing the solution or dispersion resulting from step A. and
   the solution or dispersion resulting from step B.

One embodiment of the claimed process provides that the solution or the dispersion resulting from step A. is added to the solution or the dispersion resulting from step B. Alternatively, the solution or the dispersion resulting from step B. is added to the solution or the dispersion resulting from step A. In another embodiment it is provided that the solution or the dispersion resulting from step A. and the solution or the dispersion resulting from step B. are mixed continuously. For instance, this can be achieved by a microreactor. Independently of which method is used to mix the solution or dispersion resulting from step A. and the solution or dispersion resulting from step B. provision can be made for the use at least one metering device.

In another embodiment according to the present invention, the reaction mixture is prepared in one single step. This means that only one solution or dispersion is prepared, which comprises
a) the at least one precious metal precursor and or the at least one precious metal precursor and the at least one base metal precursor,
b) the inorganic additive,
   and optionally
c) the stabilizer.

It was found that the internal temperature T_{R} of the respective reactor (= reaction temperature) is - together with the reaction period - another key factor to control the nanoparticle size within the bimodal particle size distribution. By implementation of a temperature program comprising at least two stages a better control of the reaction progress and/or a full or nearly quantitative conversion of the starting materials can be achieved.

In one embodiment of the process step b) comprises at least two stages, wherein
- in a first stage a temperature T_{R1} is in the range of 0 °C to 35 °C, and
- in a second stage a temperature T_{R2} is in the range of 40 °C to a boiling temperature of the reaction medium.

"Temperature T_{R1}" and "temperature T_{R2}", respectively, refers to the internal temperature T_{R1} and T_{R2}, respectively, of the respective reactor. Provision is made for at least one temperature sensor determining the internal temperature T_{R1} and T_{R2}, respectively, which is usual identical to an average internal temperature T_{A1} and T_{A2}, respectively, of the reactor. The temperature sensor for determining the internal temperature T_{R1} and T_{R2}, respectively, may be identical to that one applied for determining the internal temperature T_{R}.

A preferred embodiment of the process provides that
- in the first stage of step b) the temperature T_{R1} is in the range of 10 °C to 30 °C,
   and
- in the second stage of step b) the temperature T_{R2} is in the range of 60 °C to 300°C.

The first stage of step b) takes place at a comparatively low temperature T_{R1}. Thereby, under mild reaction conditions and thus in an energy-saving and thus cost-efficient manner it is ensured that a homogeneous reaction mixture is formed. For the second stage the internal temperature T_{R} is increased from the internal temperature T_{R1} to the internal temperature T_{R2}, the temperature at which reduction of the precious metal and/or base metal ionic species takes place. In one embodiment of the process the internal temperature T_{R2} is in the range of the reaction medium's boiling temperature or identical to it. For instance, if water is the predominant component of the aqueous reaction medium, the boiling temperature may be - depending on the other reaction conditions - in the range of 90 °C to 110 °C. Another embodiment of the claimed process provides that the reaction mixtures is heated to the boiling point of the reaction medium for up to 24 hours. Thereby it is assured that reduction of the precious metal and/or base metal ionic species is completed. However, it is also possible - dependent on, amongst others, the composition of the reaction medium - that the internal temperature T_{R2} is by far below the reaction medium's boiling temperature, i.e. reduction of the precious and/or base metal ionic species takes place and/or is completed before the reaction medium's boiling temperature is reached.

Varying the internal temperature T_{R2} is also used for means of size control. However, not only T_{R1} and T_{R2} are adjustable, but also the heating rate, given in K per minute, applied when increasing the internal temperature to T_{R2} and/or the internal temperature T_{R1} or T_{R2} itself. This kind of temperature control and fine tuning of the internal temperature T_{R} is again in contrast to typical procedures known from prior art. For example, in a typical procedure according to Herricks *et al.* a H₂PtCl₆ solution in ethylene glycol is rapidly added to ethylene glycol containing NaNO₃ and poly(vinyl pyrrolidone) and being held at 160 °C.

Another embodiment of the process provides that the internal temperature T_{R} is regulated and/or controlled by means of a heat transfer medium W_{R}. For this purpose, a cryostat can be used which ideally comprises a heat transfer medium applicable for both cooling and heating. By using the heat transfer medium W_{R} deviations of the internal temperature T_{R} from a defined set point Ts can be counterbalanced to the greatest extent. Realisation of a constant internal temperature T_{R} is - due to the common equipment impairments - hardly possible. However, by applying the heat transfer medium W_{R} step b) can be carried out in at least two predefined temperature ranges T_{R1} and T_{R2}.

It has to be noted that in case dispersions of steps A and B are prepared separately and then mixed as described above, it is possible to mix the dispersion first and then to heat the mixture, but it also possible to heat the separate dispersions A and B first and to mix them afterwards. All of the above mentioned with regard to carrying out the heating and setting and varying the internal temperatures also applies when separate dispersions A and B are used.

It was found by the inventors that the nanoparticle size is also determined by time. Thus, dependent on the intended size ranges within the bimodal particle size distribution the period in which step b) takes place is varied. In one embodiment of the claimed process step b) comprises a period in the range of 5 min to 24 hours. Preferably the first stage of step b) comprises a period in the range of 5 min to 6 hours, more preferably the first stage of step b) comprises a period in the range of 5 min to 4 hours and most preferably the first stage of step b) comprises a period in the range of 5 min to 1 hour. In addition, the period in which step b) takes place is - apart from other reaction conditions like solvent, metal precursor, its concentration, reducing agent, inorganic additive and stabilizer - dependent on the heating rate.

A further embodiment of the claimed process provides that the heating rate in step b) is in the range of 0.5 K per minute to 20 K per minute. The heating rate may be varied depending on which temperature increase is desired, i.e. increase of the internal temperature T_{R1} to T_{R2} or increase of the internal temperature T_{R1} or T_{R2} themselves.

Moreover, it was found that the pH value of the reaction mixture generally affects the nanoparticle formation and size. In one embodiment of the process the reaction mixture has a pH value in the range of 4 to 11, preferably in the range of 6 to 10. In general, the pH value has to be measured before heating the reaction mixture. However, in aprotic solvents no pH value is defined.

The problem is further solved by a colloidal suspension of precious metal nanoparticles and/or precious metal alloy nanoparticles,
▪ the suspension comprising a bimodal particle size distribution of the precious metal nanoparticles and/or the precious metal alloy nanoparticles,
▪ the precious metal nanoparticles and/or the precious metal alloy nanoparticles within the bimodal particle size distribution each having an average maximum Feret diameter < 100 nm,
▪ in case the suspension comprises precious metal alloy nanoparticles,
   each alloy nanoparticle comprising at least one first metal and at least one second metal, wherein
   - the at least one first metal is a precious metal,
   - the at least one second metal is selected from the group consisting of precious metals and base metals
      and
   - the at least one second metal is different from the at least one first metal,
   obtained or obtainable by any embodiment of the process claimed above.

The colloidal suspension obtainable by the one-pot process claimed above comprises two groups of nanoparticles having different size ranges. This provides the advantage that a single colloidal suspension is directly applicable to two or more different catalytic reactions requiring significantly different particle sizes. Additionally, the particle size itself is particularly widely adjustable, notably by far beyond the threshold limit of 10 nm. Moreover, it is particularly worth mentioning that a first group of the precious metal nanoparticles and/or the precious metal alloy nanoparticles within the colloidal suspension obtainable by the herein claimed process comprises - compared to a second group of the precious metal nanoparticles and/or the precious metal alloy nanoparticles - smaller nanoparticles. Surprisingly, it has been found by the inventors that the first group of the precious metal nanoparticles and/or the precious metal alloy nanoparticles is beneficial for the ageing behaviour of a heterogeneous catalyst obtainable by using a colloidal suspension according to the present invention. The reason for this is that the comparatively smaller nanoparticles comprised in the first group are "sacrificial" at high temperatures, i.e. during the preparation of an above-mentioned heterogeneous catalyst. Consequently, the precious metal nanoparticles and/or the precious metal alloy nanoparticles of the first group may not be detectable or identifiable, respectively, within the heterogeneous catalysts, particularly after the drying and calcinating step of the catalyst preparation process. Thus, after preparing a heterogeneous catalyst the bimodal particle size distribution of the colloidal suspension might no longer be existent.

Particle size control of the nanoparticles within one colloidal suspension occurs by minor changes - within strict limits - of the straightforward synthesis protocol. There is a large variety of parameters being variable within strict limits such as solvent, metal precursor, metal concentration, stabilizer, molar ratio between stabilizer and precious metal or precious metals, respectively, inorganic additive, molar ratio between anion of the inorganic additive and the precious metal or precious metals, respectively, internal temperature T_{R} of the reactor and time period of the respective process steps. Thus, customized colloidal suspensions are made available which can be used for a large variety of catalytic reactions showing a dependency on the nanoparticle size. Another advantage of the provided colloidal suspension is that all compounds used for its synthesis, i.e. reagents, reactants, additives, precursors and solvents, are halogen-free - as defined above - and commercially available. Particularly, the precious metal and base metal precursors are commercially available halogen-free metal salts and metal complexes, respectively, whereby some of the applicable metal precursors are only available as aqueous solutions. Thus, no labour-intensive, time-consuming and/or expensive preparation or *in situ* generation of any compound is required and no solvent exchange is needed for preparing the herein claimed colloidal suspension. Due to the absence of halogens - as defined above - one of the most important prerequisites for automotive applications is fulfilled. Moreover, the inorganic additive does not contain a precious metal and thus is comparatively inexpensive. Based on the aforementioned advantages the claimed colloidal suspension may also readily be produced in industrial scale. In summary, the provided colloidal suspension comprising precious metal nanoparticles and/or precious metal alloy nanoparticles is comparatively ecologically friendly and economically attractive.

One embodiment of the claimed colloidal suspension provides that
- a first group of the precious metal nanoparticles and/or the precious metal alloy nanoparticles has an average maximum Feret diameter in the range of 0.5 to 5 nm, and
- a second group of the precious metal nanoparticles and/or the precious metal alloy nanoparticles has an average maximum Feret diameter in the range of 7 to < 100 nm.

Such a bimodal particle size distribution comprises both very small and comparatively large nanoparticles. Thereby, the particle size of the second group is particularly widely adjustable, notably by far beyond the threshold limit of 10 nm, e.g. 16.4 nm (cf. Example 3).

By fine tuning of the parameters of the process described above it is not only possible to provide a bimodal particle size distribution, but also to adjust the particle size within the two groups of nanoparticles. This provides the advantage that a single colloidal suspension is directly applicable to a large variety of catalytic reactions requiring significantly different particle sizes, e.g. to platinum catalysed CO conversion, NH₃ oxidation and NO oxidation.

The use of the colloidal suspension of precious metal nanoparticles and/or precious metal alloy nanoparticles concerns a process for preparing a washcoat using a colloidal suspension of precious metal nanoparticles and/or precious metal alloy nanoparticles according to any embodiment of the colloidal suspension obtained or obtainable by the process claimed above,
▪ the suspension comprising a bimodal particle size distribution of the precious metal nanoparticles and/or the precious metal alloy nanoparticles,
▪ the precious metal nanoparticles and/or the precious metal alloy nanoparticles within the bimodal particle size distribution each having an average maximum Feret diameter < 100 nm,
▪ in case the suspension comprises precious metal alloy nanoparticles, each alloy nanoparticle comprising at least one first metal and at least one second metal, wherein
   - the at least one first metal is a precious metal,
   - the at least one second metal is selected from the group consisting of precious metals and base metals,
      and
   - the at least one second metal is different from the at least one first metal,
   comprising the steps of
   a) providing the colloidal suspension of precious metal nanoparticles and/or precious metal alloy nanoparticles,
      and
   b) contacting the suspension from step a) with a white washcoat comprising at least one inorganic base metal oxide.

A "washcoat" is a suspension of so-called "white washcoat" and catalytically active material. The "white washcoat" comprises of at least one inorganic base metal oxide.The inorganic case metal oxides comprise acid-stable oxides of the main group elements and the transition group elements as further exemplified below. The catalytically active material is the material or the compounds which actually effect the desired reaction, e.g. the conversion of exhaust gases into harmless gases. Either the white washcoat material or the catalytically active material or both may be present in the form of a suspension or dispersion before mixing.

Advantageously, the colloidal suspension obtainable by the one-pot process claimed above comprises two groups of nanoparticles having different size ranges. Therefore, the herein described use of such a colloidal suspension for preparing a washcoat and the process for preparing a washcoat using the colloidal suspension, respectively, lead to a washcoat being directly usable for the preparation of a heterogeneous catalyst applicable to different catalytic reactions requiring significantly different particle sizes. Additionally, the particle size within the colloidal suspension is particularly widely adjustable, notably by far beyond the threshold limit of 10 nm. Particle size control of the nanoparticles within one colloidal suspension occurs by minor changes - within strict limits - of the straightforward synthesis protocol. There is a large variety of parameters being variable within strict limits such as solvent, metal precursor, metal concentration, stabilizer, molar ratio between stabilizer and precious metal or precious metals, respectively, inorganic additive, molar ratio between anion of the inorganic additive and precious metal or precious metals, respectively, internal temperature T_{R} of the reactor and time period of the respective process steps. Thus, customized washcoats are made available which can be used for the preparation of a large variety of heterogeneous catalysts comprising two groups of nanoparticles having different size ranges. Another advantage of the above-mentioned use of the colloidal suspension and the process for preparing a washcoat, respectively, is that all compounds used for the synthesis of the colloidal suspension, i.e. reagents, reactants, additives, precursors and solvents, are halogen-free and commercially available. Particularly, the precious metal and base metal precursors are commercially available halogen-free metal salts and metal complexes, respectively, whereby some of the applicable metal precursors are only available as aqueous solutions. Thus, no labour-intensive, time-consuming and/or expensive preparation or *in situ* generation of any compound is required and no solvent exchange is needed for preparing the herein claimed colloidal suspension. Due to the halogen-free procedure one of the most important prerequisites for automotive applications is fulfilled. Moreover, the inorganic additive does not contain a precious metal and thus is comparatively inexpensive. Based on the aforementioned advantages the claimed use of the colloidal suspension and the process for preparing a washcoat, respectively, can also readily be conducted in industrial scale. In summary, the use of the colloidal suspension for preparing a washcoat and the process for preparing a washcoat by using a colloidal suspension according to the present invention, respectively, are comparatively ecologically friendly and economically attractive.

In one embodiment of the use of the colloidal suspension of precious metal nanoparticles and/or precious metal alloy nanoparticles and the process for preparing a washcoat using a colloidal suspension of precious metal nanoparticles and/or precious metal alloy nanoparticles, respectively, the white washcoat comprising at least one inorganic base metal oxide is a carrier for the precious metal nanoparticles and/or precious metal alloy nanoparticles from the colloidal suspension. The latter is obtained or obtainable by the process claimed above. The white washcoat provides a high specific surface area needed for the dispersion and/or immobilisation of the precious metal nanoparticles and/or precious metal alloy nanoparticles from the colloidal suspension according to the present invention. Alternatively, or in addition, the white washcoat comprising at least one inorganic base metal oxide is a stabilizer and/or a binder. In general, the washcoat according to the present invention shows a good long-term stability over several weeks, i.e. at least three weeks. However, depending on the respective composition the long-term stability can be enhanced by a stabilizer and/or a binder.

As there is a large variety of potential white washcoat materials it can be ensured that - under consideration of the later application of the heterogeneous catalyst prepared by using the respective washcoat - the applied white washcoat material does not exhibit any catalytic activity of its own.

Another embodiment of the use of the colloidal suspension of precious metal nanoparticles and/or precious metal alloy nanoparticles and the process for preparing a washcoat using a colloidal suspension of precious metal nanoparticles and/or precious metal alloy nanoparticles, respectively, provides that the white washcoat material comprises at least one inorganic base metal oxide selected from the group consisting of aluminum oxide or alumina (Al₂O₃), silicon dioxide (SiO₂), titanium dioxide (TiO₂), cerium dioxide (CeO₂), zirconium dioxide (ZrO₂), vanadium oxide (V₂O₅), lanthanum oxide (La₂O₃), zeolites and combinations thereof. In addition, other oxides, for instance, oxides of base metals or of lanthanides may also be comprised in the support material for the purpose of stabilization.

Moreover, the problem is solved by a washcoat comprising
- a colloidal suspension of precious metal nanoparticles and/or precious metal alloy nanoparticles
   and
- a washcoat material comprising at least one inorganic base metal oxide,
obtained or obtainable by the herein claimed process for preparing a washcoat using a colloidal suspension of precious metal nanoparticles and/or precious metal alloy nanoparticles according to any embodiment of the colloidal suspension obtained or obtainable by the process claimed above.

Advantageously, the washcoat according to the present invention comprises a colloidal suspension of precious metal nanoparticles and/or precious metal alloy nanoparticles obtained or obtainable by the process claimed above and a white washcoat material comprising at least one inorganic base metal oxide. Thus, the precious metal nanoparticles and/or precious metal alloy nanoparticles are dispersed and/or immobilised on the surface area of the washcoat material.

In one embodiment of the present invention, the washcoat composition described above is used for preparing a heterogeneous catalyst.

The use of the washcoat concerns a process for preparing a heterogeneous catalyst using a washcoat according to any embodiment of the washcoat obtained or obtainable by the process claimed above, wherein the washcoat is applied onto a solid support material. Well-known support materials in the field of automotive exhaust purification devices are, for instance, wall-flow filters and flow-through substrates. The skilled person knows how to prepare a washcoat and how to apply it onto a solid support material. He can apply this knowledge without departing from the scope of the claims.

Advantageously, the herein claimed washcoat is comparatively long-term stable and hence can be stored for at least several weeks, i.e. at least three weeks, without agglomeration, decomposition or ageing of the comprised nanoparticles. This is a major advantage as a heterogeneous catalyst can be prepared just before it is needed, namely easily by applying a stored, stable washcoat to a solid support. Another advantage is that the colloidal suspension obtainable by the one-pot process claimed above and comprised in the at least one washcoat comprises two groups of nanoparticles having different size ranges. Therefore, the herein described process for preparing a heterogeneous catalyst leads to a heterogeneous catalyst which is directly applicable to two or more different catalytic reactions requiring significantly different particle sizes. Additionally, the particle size within one colloidal suspension is particularly widely adjustable, notably by far beyond the threshold limit of 10 nm. Particle size control of the nanoparticles within one colloidal suspension occurs by minor changes - within strict limits - of the straightforward synthesis protocol. There is a large variety of parameters being variable within strict limits such as solvent, metal precursor, metal concentration, stabilizer, molar ratio between stabilizer and precious metal or precious metals, respectively, inorganic additive, molar ratio between anion of the inorganic additive and precious metal or precious metals, respectively, internal temperature T_{R} of the reactor and time period of the respective process steps. Thus, by using at least one washcoat obtained or obtainable by the process claimed above customized heterogeneous catalysts are made available which can be used for a large variety of catalytic reactions showing a dependency on the nanoparticle size. Another advantage of the process for preparing a heterogeneous catalyst is that all compounds used for the synthesis of the at least one colloidal suspension, i.e. reagents, reactants, additives, precursors and solvents, are halogen-free - as defined above - and commercially available. Particularly, the precious metal and base metal precursors are commercially available halogen-free metal salts and metal complexes, respectively, whereby some of the applicable metal precursors are only available as aqueous solutions. Thus, no labour-intensive, time-consuming and/or expensive preparation or *in situ* generation of any compound is required and no solvent exchange is needed for preparing the herein claimed colloidal suspension. Due to the halogen-free procedure one of the most important prerequisites for automotive applications is fulfilled. Moreover, the inorganic additive does not contain a precious metal and thus is comparatively inexpensive. Based on the aforementioned advantages the claimed use of the washcoat according to the present invention and the process for preparing a heterogeneous catalyst using a washcoat, respectively, can also readily be conducted in industrial scale. In summary, the use of the washcoat according to the present invention for preparing a heterogeneous catalyst and the process for preparing a heterogeneous catalyst by using a colloidal suspension according to the present invention, respectively, are comparatively ecologically friendly and economically attractive.

Advantageously, by applying the above described process for preparing a heterogeneous catalyst different types of catalysts are available:
a. a heterogeneous catalyst comprising precious metal nanoparticles, e.g. platinum nanoparticles,
b. a heterogeneous catalyst comprising precious metal alloy nanoparticles comprising at least two different precious metals, e.g. platinum and ruthenium,
c. a heterogeneous catalyst comprising precious metal alloy nanoparticles comprising at least one precious metal and at least one base metal, e.g. platinum and copper or platinum and tin,
   and
d. a heterogeneous catalyst comprising precious metal nanoparticles according to a. and precious metal alloy nanoparticles according to b. and/or c.

In one embodiment the process for preparing a heterogeneous catalyst comprises a drying step and/or a heating step. The drying step and/or heating step can be conducted before and/or after step b). Thereby the liquid components, in most cases comprising water, of the washcoat are removed. The liquid components can be identical to the aqueous reaction medium of the respective colloidal suspension comprised in the washcoat.

In case of the preparation of a heterogeneous catalyst comprising alloy nanoparticles there exist the following pathways:
i) In step a) at least one washcoat comprising
   - a colloidal suspension of precious metal alloy nanoparticles and
   - a washcoat material
      is provided,
      each alloy nanoparticle comprising at least one first metal and at least one second metal, wherein
   - the at least one first metal is a precious metal,
   - the at least one second metal is selected from the group consisting of precious metals and base metals,
      and
   - the at least one second metal is different from the at least one first metal ,
   followed by step b), and,
   where appropriate, supplemented by a drying step and/or a heating step;
   or
ii) In step a) at least one washcoat comprising
   - a colloidal suspension of precious metal nanoparticles and/or precious metal alloy nanoparticles
      and
   - a washcoat material
      is provided,
      each alloy nanoparticle comprising at least one first metal and at least one second metal, wherein
   - the at least one first metal is a precious metal,
   - the at least one second metal is selected from the group consisting of precious metals and base metals, and
   - the at least one second metal is different from the at least one first metal ,
   followed by step b), and,
   where appropriate, supplemented by a drying step and/or a heating step.

Subsequently, the obtained heterogeneous catalyst is - according to step a) of the claimed process - treated with a colloidal suspension of nanoparticles comprising at least one third metal selected from the group consisting of precious metals and base metals, wherein the at least one third metal is different from the at least one first metal and from the at least one second metal, and, where appropriate, supplemented by a drying step and/or a heating step. Pathways i) and ii) are not limited to the described steps, but may be supplemented by further steps, where appropriate. The nanoparticles provided in i) step a) and in ii) step a), respectively, are precious metal nanoparticles, e.g. platinum nanoparticles, and/or precious metal alloy nanoparticles comprising at least one precious metal and at least one metal selected from the group consisting of precious metals and base metals, e.g. platinum and ruthenium or platinum and copper.

In a further embodiment of the claimed process for preparing a heterogeneous catalyst the solid support comprises at least one material selected from the group consisting of graphites, carbon blacks, carbonaceous materials, polymer materials and ceramic materials. A suitable solid support should comprise carbon, aluminium, silicon, titanium, zirconium, cerium and/or a lanthanide. For example, the solid support may comprise a metal oxide, a mixed metal oxide and/or a zeolite. As there is a large variety of potential solid supports it can be ensured that - under consideration of the later application of the heterogeneous catalyst itself - the applied solid support does not exhibit any catalytic activity of its own.

In case the heterogeneous catalyst obtainable by the process claimed above shall be used as a fuel cell catalyst, the solid support comprises at least one material which is preferably selected from the group consisting of graphites, conductive carbon blacks, graphitized carbon blacks, conductive polymer materials, conductive ceramic materials, and mixtures and combinations thereof. The conductive ceramic material comprises essentially a conductive oxide of a precious or a base metal. The conductive oxide is preferably selected from the group consisting of ruthenium(IV) oxide (RuO₂), iridium(IV) oxide (IrO₂), tungsten oxide (WOₓ), molybdenum oxide (MoOₓ), niobium oxide (NbOₓ), tantalum oxide (TaOₓ), tin oxide (SnOₓ), reduced titanium oxide (TiOₓ), and mixtures and combinations thereof. The indication "x" is intended to illustrate the non-stoichiometric composition of the respective conductive oxide.

Moreover, the problem is solved by a heterogeneous catalyst comprising a solid support, precious metal nanoparticles and/or precious metal alloy nanoparticles on the support and a stabilizer, the heterogeneous catalyst obtained or obtainable according to any embodiment of the claimed process for preparing a heterogeneous catalyst.

The claimed heterogeneous catalyst comprises two groups of nanoparticles having different size ranges. Therefore, the catalyst is directly applicable to two or more different catalytic reactions requiring significantly different particle sizes. Additionally, the nanoparticle size within the bimodal particle size distribution of the colloidal suspension used for the catalyst preparation is particularly widely adjustable, notably by far beyond the threshold limit of 10 nm. Particle size control of the nanoparticles within one colloidal suspension occurs by minor changes - within strict limits - of the straightforward synthesis protocol. There is a large variety of parameters being variable within strict limits such as solvent, metal precursor, metal concentration, stabilizer, molar ratio between stabilizer and precious metal or precious metals, respectively, inorganic additive, molar ratio between anion of the inorganic additive and precious metal or precious metals, respectively, internal temperature T_{R} of the reactor and time period of the respective process steps. Thus, customized heterogeneous catalysts are made available which can be used for a large variety of catalytic reactions showing a dependency on the nanoparticle size. Another advantage of the heterogeneous catalyst is that all compounds used for the synthesis of the colloidal suspension, i.e. reagents, reactants, additives, precursors and solvents, are halogen-free - as defined above - and commercially available. Particularly, the precious metal and base metal precursors are commercially available halogen-free metal salts and metal complexes, respectively, whereby some of the applicable metal precursors are only available as aqueous solutions. Thus, no labour-intensive, time-consuming and/or expensive preparation or *in situ* generation of any compound is required and no solvent exchange is needed for preparing the herein claimed colloidal suspension. Due to the absence of halogens - as defined above - one of the most important prerequisites for automotive applications is fulfilled. Moreover, the inorganic additive does not contain a precious metal and thus is comparatively inexpensive. Based on the aforementioned advantages the claimed heterogeneous catalyst can also readily be prepared in industrial scale. In summary, the heterogeneous catalyst according to the present invention is comparatively ecologically friendly and economically attractive.

In addition, it was found that heterogeneous catalysts according to the present invention reveal a relatively high ageing resistance and thus show a better catalytic performance, when compared to catalysts prepared by using a colloidal suspension comprising a monomodal particle size distribution. Surprisingly, it has been found by the inventors that the first group of precious metal nanoparticles and/or precious metal alloy nanoparticles is beneficial for the ageing behaviour of a heterogeneous catalyst obtainable by using a colloidal suspension according to the present invention. The reason for this is that the comparatively smaller nanoparticles comprised in the first group are "sacrificial" at high temperatures, i.e. during the preparation of an above-mentioned heterogeneous catalyst. Consequently, the precious metal nanoparticles and/or the precious metal alloy nanoparticles of the first group may not be detectable or identifiable, respectively, within the heterogeneous catalysts, particularly after the drying and calcinating step of the catalyst preparation process. Thus, after preparing a heterogeneous catalyst the bimodal particle size distribution of the colloidal suspension may no longer be existent.

In one embodiment the heterogeneous catalyst comprises a solid support, a washcoat comprising precious metal nanoparticles and/or precious metal alloy nanoparticles on the support and a optionally a stabilizer as described above.

In another embodiment the heterogeneous catalyst is free of halogens, alkali metals, phosphorus and sulphur. The definition of the term "halogen-free" given above also applies to the term "free of alkali metals", "free of phosphorus" and "free of sulphur".

In yet another embodiment of the present invention, the two groups of precious metal nanoparticles and/or precious metal alloy nanoparticles obtained by the process according to the present invention are separated from the colloidal suspension by centrifugation and/or redispersion.

Advantageously, by this process both very small and comparatively large nanoparticles are provided. The first group of nanoparticles has an average maximum Feret diameter in the range of 0.5 to 5 nm, whereas the particle size of the second group is particularly widely adjustable, namely in the range of 7 to < 100 nm, i.e. notably by far beyond the threshold limit of 10 nm. The two groups of separated nanoparticles are each directly applicable to catalytic reactions. Alternatively, they can be used for preparing two different heterogeneous catalysts comprising differently sized nanoparticles according to the above-mentioned size ranges.

Particle size control of the nanoparticles within one colloidal suspension obtainable by the herein claimed process occurs by minor changes - within strict limits - of the straightforward synthesis protocol. There is a large variety of parameters being variable within strict limits such as solvent, metal precursor, metal concentration, stabilizer, molar ratio between stabilizer and precious metal or precious metals, respectively, inorganic additive, molar ratio between anion of the inorganic additive and precious metal or precious metals, respectively, internal temperature T_{R} of the reactor and time period of the respective process steps. Thus, customized colloidal suspensions are provided. All compounds used for the synthesis of the colloidal suspension, i.e. reagents, reactants, additives, precursors and solvents, are halogen-free - as defined above - and commercially available. Particularly, the precious metal and base metal precursors are commercially available halogen-free metal salts and metal complexes, respectively, whereby some of the applicable metal precursors are only available as aqueous solutions. Thus, no labour-intensive, time-consuming and/or expensive preparation or *in situ* generation of any compound is required and no solvent exchange is needed for preparing the herein claimed colloidal suspension. Due to the absence of halogens - as defined above - one of the most important prerequisites for automotive applications is fulfilled. Moreover, the inorganic additive does not contain a precious metal and thus is comparatively inexpensive. Based on the aforementioned advantages the process for preparing precious metal nanoparticles and/or precious metal alloy nanoparticles using a colloidal suspension of precious metal nanoparticles and/or precious metal alloy nanoparticles according to the present invention may also readily be conducted in industrial scale. In summary, the nanoparticles obtainable by the above described process are comparatively ecologically friendly and economically attractive.

In summary, the one-pot process according to the present invention comprises only two steps and yields a comparatively long-term stable colloidal suspension comprising, surprisingly, a bimodal particle size distribution. This provides the advantage that a single colloidal suspension is directly applicable to two or more different catalytic reactions requiring significantly different particle sizes, e.g. to platinum catalysed CO conversion, NH₃ oxidation and NO oxidation. Additionally, the particle size itself is particularly widely adjustable, notably by far beyond the threshold limit of 10 nm. Thus, tailor-made colloidal suspensions are provided by the claimed process which can be used for a large variety of catalytic reactions showing a dependency on the nanoparticle size. A colloidal suspension obtainable by the above claimed process may also be applied for preparing a washcoat and/or a heterogeneous catalyst. It was found that heterogeneous catalysts according to the present invention reveal a relatively high ageing resistance and thus show a better catalytic performance, when compared to catalysts prepared by using a colloidal suspension comprising a monomodal particle size distribution. The reason for this is that the comparatively smaller nanoparticles comprised in the first group - having an average maximum Feret diameter in the range of 0.5 to 5 nm - are "sacrificial" at high temperatures, i.e. during the preparation of an above-mentioned heterogeneous catalyst. Consequently, the precious metal nanoparticles and/or the precious metal alloy nanoparticles of the first group are not detectable or identifiable, respectively, within the heterogeneous catalysts, particularly after the drying and calcinating step of the catalyst preparation process. Thus, after preparing a heterogeneous catalyst the bimodal particle size distribution of the colloidal suspension may no longer be existent. Moreover, a colloidal suspension according to the present invention can also be used as starting material for a process yielding two separate groups of precious metal nanoparticles and/or precious metal alloy nanoparticles, whereat each group comprises monodisperse nanoparticles. Thereby, a first group of nanoparticles has an average maximum Feret diameter in the range of 0.5 to 5 nm, whereas the particle size of a second group is particularly widely adjustable, namely in the range of 7 to < 100 nm, i.e. notably by far beyond the threshold limit of 10 nm.

Overall, the claimed process for preparing a colloidal suspension of precious metal nanoparticles and/or precious metal alloy nanoparticles is versatile, straight-forward, environmentally friendly, energy-saving, cost-efficient and easily scalable for industrial production with good yields. In addition, the colloidal suspensions obtainable by this process show high purities, particularly, they are halogen-free in the sense of the invention. Thus, they are directly usable for preparing a washcoat and/or a heterogeneous catalyst on an industrial scale or for providing two separate groups of precious metal nanoparticles and/or precious metal alloy nanoparticles, whereat each group comprises monodisperse nanoparticles.

The invention is now explained in more detail by the following figures and examples which are considered illustrative. The examples are restricting neither the invention's nor the claims' scope.

### Brief description of the drawings

- **Fig. 1**: A TEM image of a bimodal particle size distribution of platinum nanoparticles (left) and its magnification (right), cf. Example 1,
- **Fig. 2**: a TEM image of a bimodal particle size distribution of platinum nanoparticles (left) and its magnification (right), cf. Example 2,
- **Fig. 3**: a TEM image of a bimodal particle size distribution of platinum nanoparticles (left) and its magnification (right), cf. Example 3,
- **Fig. 4**: an HRTEM image of a bimodal particle size distribution of platinum nanoparticles (left) and its magnification (right), cf. Example 3,
- **Fig. 5**: a particle size distribution of platinum nanoparticles, of about 800 counted nanoparticles, showing a bimodal particle size distribution, cf. Example 3,
- **Fig. 6**: an EDX mapping of a bimodal particle size distribution of platinum nanoparticles; from left to right and from top to bottom: Pt, O, F, N, Ca, cf. Example 3,
- **Fig. 7**: a TEM image of a bimodal particle size distribution of platinum nanoparticles (left) and its magnification (right), cf. Example 4,
- **Fig. 8**: an HRTEM image and an EDX mapping of platinum/rhodium alloy nanoparticles showing a bimodal particle size distribution, cf. Example 5, and
- **Fig. 9**: a TEM image of a monomodal particle size distribution of platinum nanoparticles (left) and its magnification (right), cf. Comparative Example 2.

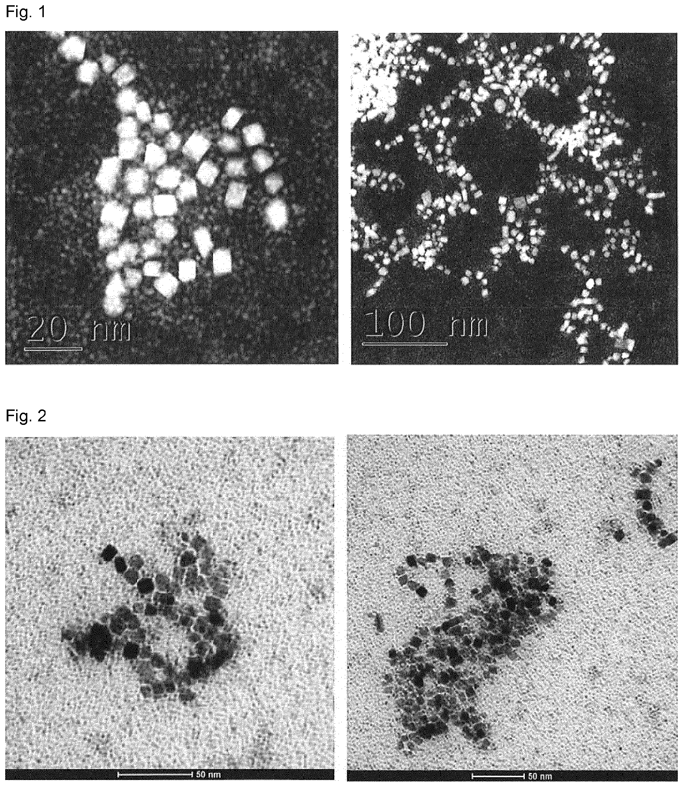

Figure 1 shows a HRTEM image (and its magnification) of a bimodal particle size distribution within a stable colloidal suspension of platinum nanoparticles obtained according to Example 1. The platinum nanoparticles have average maximum Feret diameters in the range of 1 to 2 nm and of about 10 nm.

In Figure 2 a TEM image (and its magnification) of a bimodal particle size distribution within a stable colloidal suspension of platinum nanoparticles resulted from the procedure according to Example 2 is presented. The platinum nanoparticles show average maximum Feret diameters in the range of about 1 to 2 nm for the first population and of about 9.3 nm for the second population.

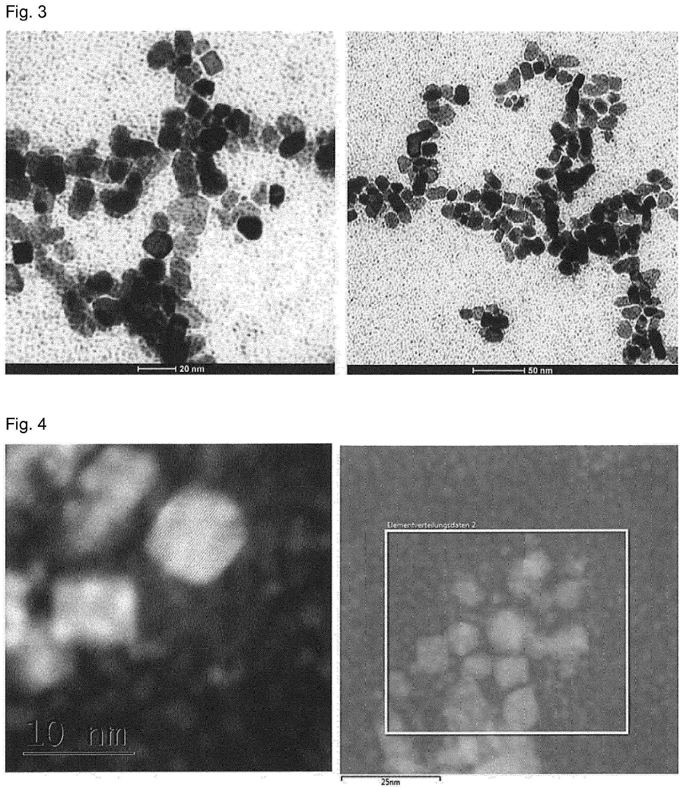

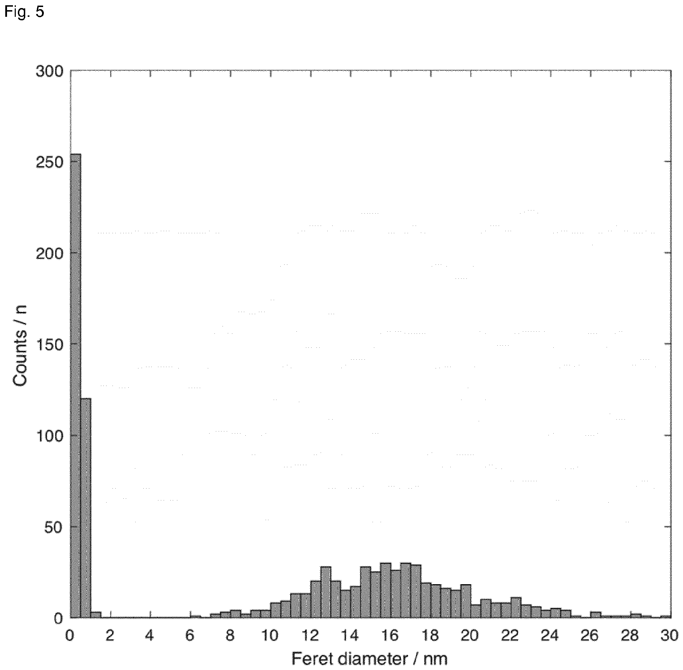

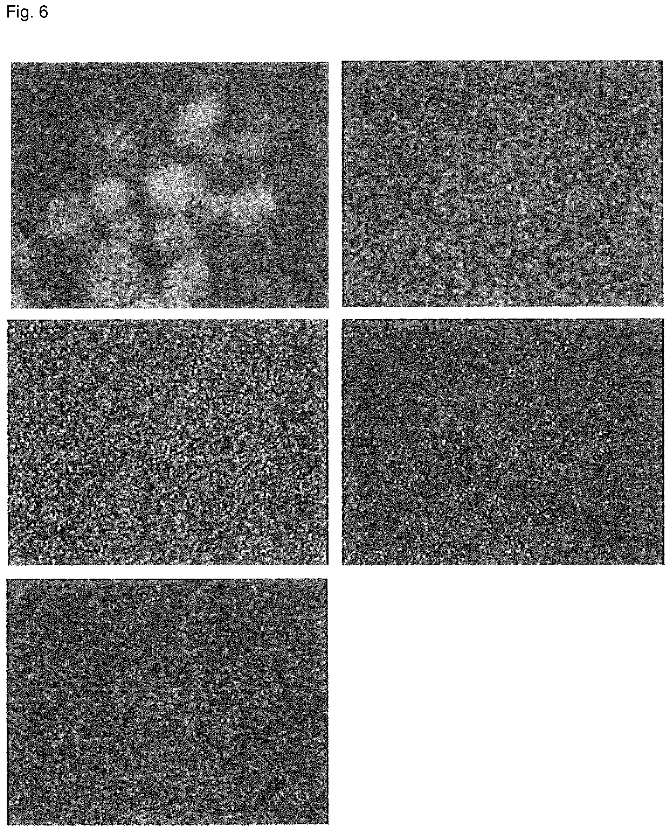

In Figure 3 a TEM image (and its magnification) of a bimodal particle size distribution within a stable colloidal suspension of platinum nanoparticles resulted from the procedure according to Example 3 is shown. The platinum nanoparticles have average maximum Feret diameters in the range of about 1 to 2 nm for the first population and of 16.4 nm as average particle size for the second population (cf. Fig. 5). The presence of platinum within the bigger nanoparticles is confirmed by both an HRTEM spectrum (and its magnification) (cf. Fig. 4) and an EDX mapping, respectively (cf. Fig. 6). In Fig. 5 the maximum Feret diameter (in nm) is plotted on the x axis and the counts (in numbers n) is plotted on the y axis. For the determination of the particle size distribution 826 platinum nanoparticles have been analysed. Fig. 6 shows the EDX mapping of the elements analysed within the stable colloidal suspension obtained according to Example 3, namely Pt, O, F, N and Ca (from left to right and from top to bottom).

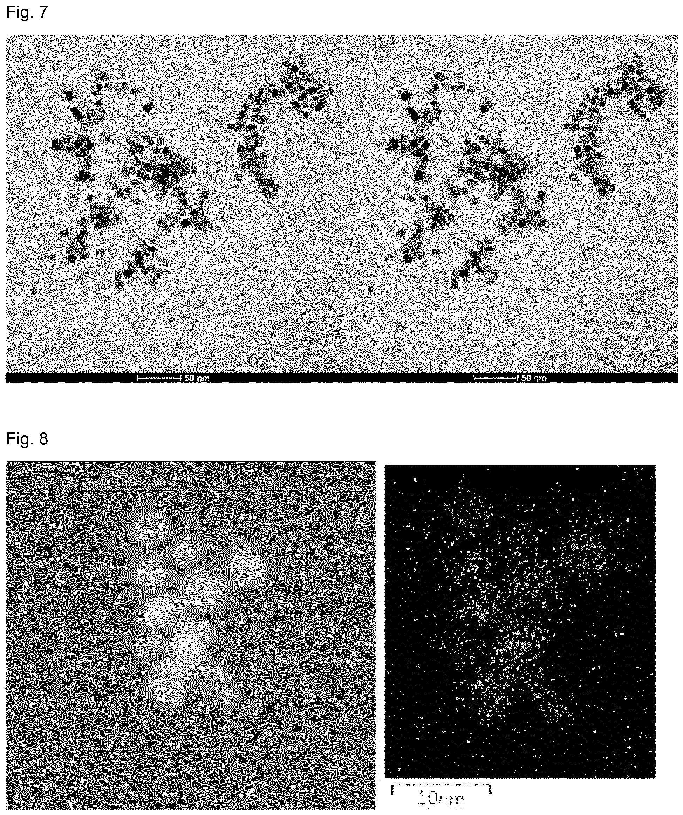

In Figure 7 a TEM image (and its magnification) of a bimodal particle size distribution within a stable colloidal suspension of platinum nanoparticles resulted from the procedure according to Example 4 is shown. The platinum nanoparticles have average maximum Feret diameters in the range of about 1 to 2 nm for the first population and of about 8.9 nm for the second population. The synthesis protocol according to Example 4 provides a aqueous reaction medium comprising water at one third of its volume. Thus, this procedure is not only simply and advantageously applicable in an industrial scale, but also comparatively green. In Figure 8 an HRTEM image and the associated EDX mapping of a bimodal particle size distribution within a stable colloidal suspension of platinum/rhodium alloy nanoparticles is presented, obtained by the synthesis protocol according to Example 5. The platinum/rhodium alloy nanoparticles have average maximum Feret diameters in the range of about 1 to 2 nm for the first population and of about 8.9 nm for the second population. The synthesis protocol Example 5 includes an example of the synthesis starting from two different precious metal precursors, with an increased total amount of precious metal three times higher than the previous examples: being more concentrated, this synthesis is even more advantageously applicable in an industrial scale, but also greener since less solvent with respect the amount of precious metal is involved.

Consequently, the aforementioned procedures result in a stable colloidal suspension comprising a bimodal particle size distribution of platinum nanoparticles and platinum/rhodium alloy nanoparticles. In addition, both the platinum nanoparticles and the platinum/rhodium nanoparticles have average maximum Feret diameters in the range of about 1 to 2 nm for the first population and of about 8.9 nm for the second population. Thus, the claimed process has been shown to be reproducible under different synthetic conditions, and in Example 5 even independently of the nanoparticles' composition.

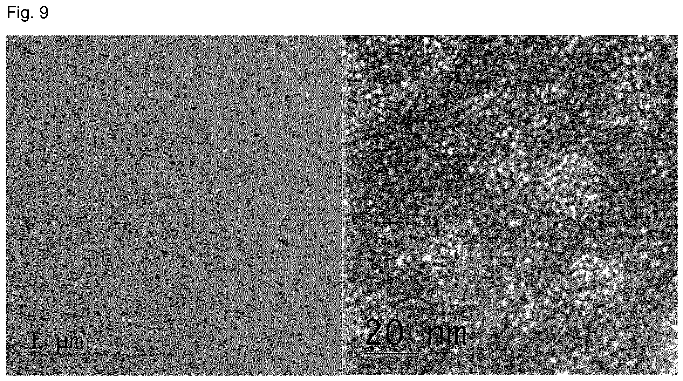

In Figure 9 a TEM image (and its magnification) of a monomodal particle size distribution within a stable colloidal suspension of platinum nanoparticles resulted from the procedure according to the Comparative Example 2 is shown. When adding an aqueous solution of (NEt₄)₂[Pt(OH)₆] (cf. Comparative Example 2) - instead of a solution of H₂PtCl₆ in EG as according to Herricks *et al.* (Comparative Example 1) - rapidly to the EG solution containing PVP and a nitrate salt, which has been preheated to 160 °C, a stable colloidal suspension of platinum nanoparticles comprising only a monomodal particle size distribution is obtained. The suspension produced by applying the synthesis protocol according to Comparative Example 2 comprises almost entirely small nanoparticles having average maximum Feret diameters in the range of about 1 to 3 nm (cf. Fig. 9).

### Examples

### General Experimental Remarks

### Reagents and Solvents

Ethylene glycol, 99% pure (CAS-No: 107-21-1) was purchased from PanReac AppliChem. Poly(*N*-vinyl-2-pyrrolidone) average mol wt. 40,000 (CAS-No: 9003-39-8) was purchased by Sigma Aldrich, Ca(NO₃)₂ x 4H₂O (CAS-No: 13477-34-4) was purchased by Merck KGaA, (NEt₄)₂[Pt(OH)₆] and (NEt₄)₃[Rh(OH₆)] were purchased from Umicore AG & Co. KG,

### Particle Characterization

The nanoparticle composition was investigated by energy dispersive X-ray spectroscopy (EDX) coupled with high resolution transmission electron microscopy (HRTEM).

The average maximum Feret diameters were obtained by TEM and HRTEM.

### Reaction Conditions

Reactions were performed in a three-neck round-bottom flask, under continuous stirring at an internal temperature of the reactor within the range of the boiling temperature of the respective solvent or solvent mixture. A heating mantle was used to control and increase the internal temperature of the reactor.

### Example 1: Preparation of a colloidal suspension of platinum nanoparticles; bimodal particle size distribution with average maximum Feret diameters of 1 to 2 nm and 10 nm

In a three-neck round flask, 0.4483 g poly(*N*-vinyl-2-pyrrolidone) (PVP, average mol wt. 40,000)) and 0.5567 g Ca(NO₃)₂ x 4H₂O were dissolved in 70 g ethylene glycol (EG). To the stirred solution a second solution of 1.3362 g of an aqueous solution of (NEt₄)₂[Pt(OH)₆] (11.68 wt.% Pt, 0.1591 g Pt) diluted to 10 g with deionized water was added. The platinum ions containing solution was added dropwise to the EG solution. The resulting mixture was stirred at room temperature for 5 min. Afterwards the temperature was raised to 160 °C. After ca. 30 min the solution changed its colour from pale milky yellow to clear dark brown-black.

### Example 2: Preparation of a colloidal suspension of platinum nanoparticles; bimodal particle size distribution with average maximum Feret diameters of 1 to 2 nm and 9.3 nm

In a three-neck round flask, 0.448 g PVP (average mol wt. 40,000) and 0.5567 g Ca(NO₃)₂ x 4 H₂O were dissolved in 70 g EG. To the stirred solution a second solution of 1.364 g of an aqueous solution of (NEt₄)₂[Pt(OH)₆] (11.54 wt.% Pt, 0.1591 g Pt) diluted to 7 g with deionized water was added. The platinum ions containing solution was added dropwise to the EG solution. The resulting mixture was stirred at room temperature for 5 min. Afterwards the temperature was raised to 140 °C. After ca. 30 min the solution changed its colour from pale milky yellow to clear dark brown-black.

### Example 3: Preparation of a colloidal suspension of platinum nanoparticles; bimodal particle size distribution with average maximum Feret diameters of 1 to 2 nm and 16.4 nm

In a three-neck round flask, 0.448 g PVP (average mol wt. 40,000) and 0.5567 g Ca(NO₃)₂ x 4 H₂O were dissolved in 70 g EG. To the stirred solution a second solution of 1.364 g of an aqueous solution of (NEt₄)₂[Pt(OH)₆] (11.54 wt.% Pt, 0.1591 g Pt) diluted to 7 g with deionized water was added. The platinum ions containing solution was slowly added to the EG solution. The resulting mixture was stirred at room temperature for 5 min. Afterwards the temperature was raised to 160 °C. After ca. 30 min the reaction mixture changed its colour from pale milky yellow to clear dark brown-black.

### Example 4: Preparation of a colloidal suspension of platinum nanoparticles; bimodal particle size distribution with average maximum Feret diameters of 1 to 2 nm and 8.9 nm

In a three-neck round flask, 0.9642 g PVP (average mol wt. 40,000) and 1.1934 g Ca(NO₃)₂ x 4 H₂O were dissolved in an mixture of 100 g EG and 50 g H₂O. To the stirred solution a second solution of 2.9647 g of an aqueous solution of (NEt₄)₂[Pt(OH)₆] (11.28 wt.% Pt, 0.3344 g Pt) was added. The platinum ions containing solution was added dropwise to the EG/H₂O solution. The resulting mixture was stirred at room temperature for 5 min. Afterwards, the temperature was raised to the boiling temperature of the EG/H₂O mixture. After ca. 20 min the reaction mixture changed its colour from pale milky yellow to clear dark brown-black. The mixture was boiled for 2 h to ensure a complete reduction.

### Example 5: Preparation of a colloidal suspension of platinum-rhodium alloy nanoparticles; bimodal particle size distribution with average maximum Feret diameters of 1 to 2 nm and 8.9 nm. Ratio of nitrate anion to precious metal is 2 : 1 and ratio of stabilizer to precious metals is 1.6 : 1. Total concentration of precious metal is 30 mmol/kg.

In a three-neck round flask, 0.9642 g PVP (average mol wt. 40,000) and 1.1934 g Ca(NO₃)₂ x 4H₂O) were dissolved in 150 g EG. To the stirred solution a second solution of 2.3718 g of an aqueous solution of (NEt₄)₂[Pt(OH)₆] (11.28 wt.% Pt, 0.2675 g Pt) was added. 5.7224 g of a third solution of (NEt₄)₃[Rh(OH₆)] (5.72 wt.% Rh, 0.3273 g Rh) were added subsequently. The resulting mixture was stirred at room temperature for 5 min. Afterwards, the temperature was raised to 160°C. After ca. 20 min the reaction mixture changed its colour to give a clear dark brown-black solution. The solution mixture was boiled for 2 h to ensure a complete reduction.

### Comparative Example 1: Procedure reported by Herricks et al. using H₂PtCl₆ instead of (NEt₄)₂[Pt(OH)₆]

1 mL of 80 mM H₂PtCl₆ solution in EG was rapidly added to 7 mL EG (held at 160 °C) containing both NaNO₃ and poly(*N*-vinyl-2-pyrrolidone) (PVP, average mol wt. 55,000, Aldrich, 30 mM as calculated in terms of the repeating unit). The concentration of H₂PtCl₆ was fixed at 10 mM. The concentration of NaNO₃ was varied in a range from 0 to 110 mM. When the molar ratio between NaNO₃ and H₂PtCl₆ was 1.6 a bimodal size distribution of nanoparticles was obtained, both populations having average nanoparticle sizes below 5 nm (cf. Herricks et al., Nano Lett. 2004, 4, 2367 - 2371, Figure 1c).

### Comparative Example 2: Preparation of a colloidal suspension of platinum nanoparticles; monomodal particle size distribution with average maximum Feret diameters of about 1 to 3 nm

In a three-neck round flask, 0.8966 g PVP (average mol wt. 40,000) and 1.111 g Ca(NO₃)₂ x 4H₂O were dissolved in an mixture of 100 g EG and 50 g H₂O. To the stirred solution a second solution of 2.749 g of an aqueous solution of (NEt₄)₂[Pt(OH)₆] (11.45 wt.% Pt, 0.3148 g Pt) diluted to 20 g of H₂O was added. The platinum ions containing solution was added to the hot EG solution which had been heated to boiling temperature. Upon drop-casting the platinum ions containing solution, the reaction mixture changed its colour from pale milky yellow to clear dark brown-black. The solution was boiled for 2 h to ensure a complete reduction.

The invention is not limited to any one of the embodiments described above, but modifiable in various ways.

As can be seen, the present invention relates to a process for preparing a colloidal suspension of precious metal nanoparticles and/or precious metal alloy nanoparticles comprising a bimodal particle size distribution. Further the invention concerns a colloidal suspension obtainable by that process and the use of such a colloidal suspension. Moreover, the invention relates to a process for preparing a washcoat, a washcoat obtainable by that process, the use of such a washcoat, a process for preparing a heterogeneous catalyst using a washcoat according to the present invention, a heterogeneous catalyst obtainable by that process and a process for preparing precious metal nanoparticles and/or precious metal alloy nanoparticles.

The one-pot process yields two groups of nanoparticles, a first comprising particles having an average maximum Feret diameter in the range of 0.5 to 5 nm and a second comprising particles with an average maximum Feret diameter in the range of 7 to < 100 nm. As size control is achieved by the claimed process tailor-made colloidal suspensions comprising predefined nanoparticles are provided which, in addition, are of high purity. Colloidal suspensions obtainable by the claimed process are directly, i.e. without further purification, usable for preparing a washcoat and/or a heterogeneous catalyst on an industrial scale and for a process yielding two separate populations of precious metal nanoparticles and/or precious metal alloy nanoparticles.

All features and advantages arising from the claims, the description and the figures, including design details, spatial arrangements and procedure steps, can be essential to the invention, either individually or in various combinations.

## Claims

1. A process for preparing a colloidal suspension of precious metal nanoparticles and/or precious metal alloy nanoparticles,
▪ the suspension comprising a bimodal particle size distribution of the precious metal nanoparticles and/or the precious metal alloy nanoparticles,
▪ the precious metal nanoparticles and/or the precious metal alloy nanoparticles within the bimodal particle size distribution each having an average maximum Feret diameter < 100 nm
and,
▪ in case the suspension comprises precious metal alloy nanoparticles,
each alloy nanoparticle comprising at least one first metal and at least one second metal, wherein
- the at least one first metal is a precious metal,
- the at least one second metal is selected from the group consisting of precious metals and base metals,
and
- the at least one second metal is different from the at least one first metal, comprising the steps of
a) preparing a reaction mixture in a water-containing reaction medium comprising at least
- one solvent component being prone to act as a reducing agent A
wherein the reaction mixture comprises the following halogen-free compounds
i. at least one precious metal precursor
or
at least one precious metal precursor and at least one base metal precursor,
ii. an inorganic additive
comprising a cation, with the proviso that precious metal cations are excluded, and a nitrate anion,
and
b) reacting the reaction mixture at a temperature T_{R} which is the boiling temperature of the water-containing reaction medium.

2. The process according to claim 1, wherein the precious metal is selected from the group consisting of ruthenium, rhodium, palladium, silver, osmium, iridium, platinum and gold, and mixtures, alloys, intermetallic compounds and combinations thereof.

3. The process according to claim 1 or 2, wherein the precious metal precursor is selected from the group consisting of precious metal acetates, precious metal propylene carbonates, precious metal hydrogen propylene carbonates, precious metal nitrates, precious metal malonates, precious metal oxalates, precious metal hydroxo complexes, precious metal hydroxometallates, and mixtures, aquo complexes, solutions and combinations thereof.

4. The process according to any one of claims 1 to 3, wherein the base metal is selected from the group consisting of scandium, titanium, vanadium, chromium, manganese, iron, cobalt, nickel, copper, zinc, yttrium, zirconium, niobium, molybdenum, hafnium, tantalum, tungsten, rhenium and tin, and mixtures, alloys, intermetallic compounds and combinations thereof.

5. The process according to any one of claims 1 to 4, wherein the base metal precursor is selected from the group consisting of base metal acetates, base metal propylene carbonates, base metal hydrogen propylene carbonates, base metal nitrates, base metal malonates, base metal oxalates, base metal hydroxo complexes, base metal hydroxometallates, and mixtures, aquo complexes, solutions and combinations thereof.

6. The process according to any one of claims 1 to 5, wherein the reaction medium comprises at least one solvent selected from the group consisting of water, acetonitrile, propylene carbonate, alcohols, polyols, sugar alcohols, and mixtures thereof.

7. The process according to any one of claims 1 to 6, wherein the at least one solvent component being prone to act as a reducing agent A is selected from the group consisting of alcohols, polyols and sugar alcohols, and mixtures thereof.

8. The process according to any one of claims 1 to 7, wherein the inorganic additive is selected from the group consisting of nitric acid, NH₄NO₃ or a nitrate salt comprising a base metal cation, and mixtures thereof.

9. The process according to any one of claims 1 to 8, wherein the reaction mixture additionally comprises a stabilizer, the stabilizer being selected from the group consisting of polymers, citrates, fatty amines, alginates and Arabic gum, and mixtures thereof.

10. The process according to any one of claims 1 to 9, wherein
step a) comprises the steps of
A. preparing a solution or a dispersion in a first solvent comprising
- the at least one precious metal precursor
or
- the at least one precious metal precursor and
the at least one base metal precursor,
B. preparing a solution or a dispersion in a second solvent comprising
i) the inorganic additive
comprising a cation, with the proviso that precious metal cations are excluded, and a nitrate anion,
and
ii) the stabilizer,
wherein the first solvent and the second solvent are solvent components of the aqueous reaction medium,
and
C. mixing the solution or dispersion resulting from step A. and
the solution or dispersion resulting from step B.

11. The process according to any one of claims 1 to 10, wherein
step b) comprises at least two stages, wherein
- in a first stage a temperature T_{R1} is in the range of 0 °C to 35 °C,
and
- in a second stage a temperature T_{R2} is in the range of 40 °C to the boiling temperature of the aqueous reaction medium.

12. A colloidal suspension of precious metal nanoparticles
and/or precious metal alloy nanoparticles,
▪ the suspension comprising a bimodal particle size distribution of the precious metal nanoparticles and/or the precious metal alloy nanoparticles,
▪ the precious metal nanoparticles and/or the precious metal alloy nanoparticles within the bimodal particle size distribution each having an average maximum Feret diameter < 100 nm,
▪ in case the suspension comprises precious metal alloy nanoparticles,
each alloy nanoparticle comprising at least one first metal and at least one second metal, wherein
- the at least one first metal is a precious metal,
- the at least one second metal is selected from the group consisting of precious metals and base metals,
and
- the at least one second metal is different from the at least one first metal, obtainable by the process according to any one of claims 1 to 11.

13. The colloidal suspension according to claim 12, wherein
- a first group of the precious metal nanoparticles and/or the precious metal alloy nanoparticles has an average maximum Feret diameter in the range of 0.5 to 5nm,
and
- a second group of the precious metal nanoparticles and/or the precious metal alloy nanoparticles has an average maximum Feret diameter in the range of 7 to < 100 nm.

14. Use of a colloidal suspension of precious metal nanoparticles and/or precious metal alloy nanoparticles
- obtained by the process according to any one of claims 1 to 11
or
- according to claim 12 or 13
for preparing a washcoat.

15. A process for preparing a washcoat using a colloidal suspension of precious metal nanoparticles and/or precious metal alloy nanoparticles
- obtained by the process according to any one of claims 1 to 11
or
- according to claim 12 or 13,
comprising the steps of
a) providing the colloidal suspension of precious metal nanoparticles and/or precious metal alloy nanoparticles,
and
b) contacting the suspension from step a) with a washcoat material comprising at least one inorganic base metal oxide.

16. Washcoat comprising
- a colloidal suspension of precious metal nanoparticles and/or precious metal alloy nanoparticles
and
- a washcoat material comprising at least one inorganic base metal oxide, obtainable by the process according to claim 15.

17. Use of a washcoat
- obtained by the process according to claim 15
or
- according to claim 16
for preparing a heterogeneous catalyst.

18. A process for preparing a heterogeneous catalyst using a washcoat comprising a colloidal suspension of precious metal nanoparticles and/or precious metal alloy nanoparticles and a washcoat material comprising at least one inorganic base metal oxide
- obtained by the process according to claim 15
or
- according to claim 16,
comprising the steps of
a) providing the washcoat,
and
b) providing a solid support to the washcoat from step a).

19. The process according to claim 18, wherein the solid support comprises at least one material selected from the group consisting of graphites, carbon blacks, carbonaceous materials, polymer materials and ceramic materials.

20. A heterogeneous catalyst comprising a solid support, precious metal nanoparticles and/or precious metal alloy nanoparticles on the support and a stabilizer, the heterogeneous catalyst obtainable by the process according to claim 18 or 19.

21. A process for preparing precious metal nanoparticles and/or
precious metal alloy nanoparticles
comprising the steps of
a) providing a colloidal suspension of precious metal nanoparticles and/or precious metal alloy nanoparticles,
- obtained by the process according to any one of claims 1 to 11,
or
- according to claim 12 or 13,
and
b) separating the two groups of precious metal nanoparticles and/or precious metal alloy nanoparticles from the colloidal suspension by centrifugation and/or redispersion.
